# EUROPEAN PATENT SPECIFICATION

(11) **EP 2 933 913 B1**
(45) Date of publication and mention of the grant of the patent: **21.03.2018**
(21) Application number: 15001645.9
(22) Date of filing: 13.04.2012
(51) Int. Cl.: H02M 7/12

(54) **POWER CONVERTER CIRCUIT AND AIR CONDITIONER**
STROMUMRICHTERSCHALTUNG UND KLIMAANLAGE DAMIT
CIRCUIT DE CONVERTISSEUR DE PUISSANCE ET CONDITIONNEUR D'AIR

(30) Priority: 02.05.2011 JP 2011103230
(43) Date of publication of application: 21.10.2015
(62) Divisional of application: 12779688.6
(73) Proprietor: DAIKIN INDUSTRIES, LIMITED, Kita-ku, 530-8323 Osaka (JP)
(72) Inventor: Ishizheki, Shinichi, Osaka-shi, Osaka, 530-8323 (JP); Satou, Toshiaki, Osaka-shi, Osaka, 530-8323 (JP)
(74) Representative: Goddar, Heinz J.

(56) References cited:
- EP-A1- 2 249 471

## Description

### Technical Field

The present invention relates to a power converter circuit and an air conditioner having the power converter circuit. Generally, a power converter is known from e.g. EP 2 249 471 A1.

### Background Art

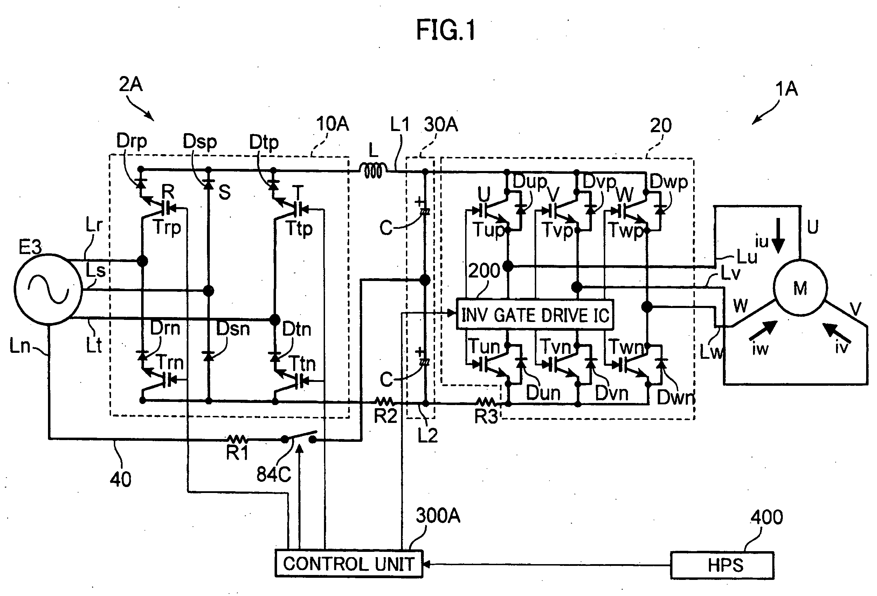

A large electromagnetic relay is conventionally used in a power converter circuit comprising a converter circuit and the like. The electromagnetic relay is used as a power switch for ensuring safety when the circuit is not in use or as a power switch for cutting off and protecting a power supply when an abnormality occurs. For example, in a direct AC-AC power converter disclosed in Patent Document 1, a power switch is provided on each of three input lines from a three-phase AC power supply to a current-type converter (refer to paragraph 0037, Fig. 1, and the like).
Patent Document 1: Japanese Patent Application Laid-open No. 2009-95149

With an electromagnetic relay, a moving contact mechanically opens or closes. Therefore, welding-induced stiction or degradation of the moving contact may potentially cause reliability of the power converter circuit to decline (problem 1). In addition, electromagnetic noise occurs due to contact bounce when the moving contact opens or closes. Propagation of the electromagnetic noise to a low current circuit such as a control circuit of the power converter circuit may potentially cause the circuit to malfunction. In particular, when a connection wire to a commercial power supply is shared by a converter circuit and a low current circuit is connected to a power supply branching from the connection wire, the low current circuit is significantly affected (problem 2). Furthermore, when an electromagnetic relay is used in a power switch, the electromagnetic relay must be large. Therefore, substrate size of the power supply circuit increases (problem 3).

An object of the present invention is to provide a power converter circuit and an air conditioner which are capable of solving the problems described above.

### Summary of the Invention

A power converter circuit according to the present invention is a power converter circuit which is connected to a three-phase AC power supply (E3) via first to third input lines (Lr, Ls, Lt) and a neutral line (Ln) having an opening/closing switch (84C) and a current-limiting resistor (R1) and which is connected to a capacitor (C) via a positive-side DC power line(L1) and a negative-side DC power line (L2). The power converter circuit comprises: upper arm-side switching elements (Trp, Tsp, Ttp) which are provided on upper arms of at least two phases among upper arms of three phases and which makes a current pathway from the first to third input lines (Lr, Ls, Lt) to the positive-side DC power line(L1) conductive in a conductive state; lower arm-side switching elements (Trn, Tsn, Ttn) which are provided on lower arms that are in-phase with the upper arms on which the upper arm-side switching elements (Trp, Tsp, Ttp) are provided and which makes a current pathway from the negative-side DC power line (L2) to the first to third input lines (Lr, Ls, Lt) conductive in a conductive state; and control units (300A, 300C) which control switching of the upper arm-side switching elements (Trp, Tsp, Ttp) and the lower arm-side switching elements (Tm, Tsn, Ttn) and which control opening and closing of the opening/closing switch (84C). In the power converter circuit, the control units (300A, 300C) close the opening/closing switch (84C) until an inrush current becomes suppressible after start of energization of the power converter circuit and control switching of each of the switching elements (Trp, Trn, Tsp, Tsn, Ttp, Ttn) so that the upper and lower arms of one phase enter a conductive state and the remaining arms enter a non-conductive state.

According to the present invention, the switching elements function as power switches. Therefore, a large electromagnetic relay as a power switch can be eliminated from an input unit of a converter circuit. As a result, the following effects (1) to (3) can be obtained. (1) Since there is no longer a risk of welding-induced stiction or degrading of the moving contact of the electromagnetic relay previously used as the power switch, reliability of the converter circuit can be improved. (2) Electromagnetic noise generated when the moving contact opens and closes can be prevented from propagating to a low current circuit such as a control circuit of the power converter circuit and, in particular, to a low current circuit which shares a connection wire to a commercial power supply with the converter circuit and which is connected to a power supply branching from the connection wire. (3) A circuit board can be downsized.

According to the present invention, a large electromagnetic relay as a power switch can be eliminated from the power converter circuit. Therefore, according to the present invention, the reliability of the converter circuit can be improved, electromagnetic noise generated by the opening and closing of the electromagnetic relay can be prevented from propagating to a low current circuit such as a control circuit of the power converter circuit and, in particular, to a low current circuit which shares a connection wire to a commercial power supply with the converter circuit and which is connected to a power supply branching from the connection wire, and the circuit board can be downsized.

### Brief Description of the Drawings

[Fig. 1] Fig. 1 is a block diagram showing a schematic configuration of a power converter circuit in a power supply circuit included in an air conditioner according to a first embodiment of the present invention.
[Fig. 2] Fig. 2 is a time chart showing behavior of switching elements of each phase and the like during a period from start of energization of the power converter circuit to stop of charging of a capacitor in the power supply circuit shown in Fig. 1.
[Fig. 3] Fig. 3 is a time chart showing behavior of switching elements of each phase and the like when a high-pressure switch is activated in the power converter circuit in the power supply circuit shown in Fig. 1.
[Fig. 4] Fig. 4 is a block diagram showing a schematic configuration of a power converter circuit in a power supply circuit included in an air conditioner.
[Fig. 5] Fig. 5 is a time chart showing behavior of switching elements of each phase and the like during a period from start of energization of the power converter circuit to stop of charging of a capacitor in the power supply circuit shown in Fig. 4.
[Fig. 6] Fig. 6 is a time chart showing behavior of switching elements of each phase and the like when a high-pressure switch is activated in the power converter circuit in the power supply circuit shown in Fig. 4.
[Fig. 7] Fig. 7 is a block diagram showing a schematic configuration of a power converter circuit in a power supply circuit included in an air conditioner.
[Fig. 8] Fig. 8 is a time chart showing behavior of switching elements of each phase and the like during a period from start of energization of the power converter circuit to stop of charging of a capacitor in the power supply circuit shown in Fig. 7.
[Fig. 9] Fig. 9 is a time chart showing behavior of switching elements of each phase and the like when a high-pressure switch is activated in the power converter circuit in the power supply circuit shown in Fig. 7.
[Fig. 10] Fig. 10 is a block diagram showing a schematic configuration of a power converter circuit in a power supply circuit included in an air conditioner according to a second embodiment of the present invention.
[Fig. 11] Fig. 11 is a time chart showing behavior of switching elements of each phase and the like during a period from start of energization of the power converter circuit to stop of charging of a capacitor in the power supply circuit shown in Fig. 10.
[Fig. 12] Fig. 12 is a time chart showing behavior of switching elements of each phase and the like when a high-pressure switch is activated in the power converter circuit in the power supply circuit shown in Fig. 10.
[Fig. 13] Fig. 13 is a block diagram showing a schematic configuration of a power converter circuit in a power supply circuit included in an air conditioner.
[Fig. 14] Fig. 14 is a time chart showing behavior of switching elements of each phase and the like during a period from start of energization of the power converter circuit to stop of charging of a capacitor in the power supply circuit shown in Fig. 13.
[Fig. 15] Fig. 15 is a time chart showing behavior of switching elements of each phase and the like when a high-pressure switch is activated in the power converter circuit in the power supply circuit shown in Fig. 13.
[Fig. 16] Fig. 16 is a block diagram showing a schematic configuration of a power converter circuit in a power supply circuit included in an air conditioner.
[Fig. 17] Fig. 17 is a block diagram showing a schematic configuration of a power converter circuit in a power supply circuit included in an air conditioner.
[Fig. 18] Fig. 18 is a time chart showing switching control in the power converter circuit shown in Fig. 17.
[Fig. 19] Fig. 19 is a time chart showing switching control in the power converter circuit shown in Fig. 13.
[Fig. 20] Fig. 20 is a block diagram showing a schematic configuration of another mode of a power converter circuit in a power supply circuit included in an air conditioner according to the first embodiment of the present invention.
[Fig. 21] Fig. 21 is a block diagram showing a schematic configuration of another mode of a power converter circuit in a power supply circuit included in an air conditioner according to another example of the first embodiment of the present invention.

### Detailed Description of the Preferred Embodiments of the Invention

### <First embodiment>

Fig. 1 is a block diagram showing a schematic configuration of a power converter circuit 2A in a power supply circuit included in an air conditioner 1A according to a first embodiment of the present invention. The air conditioner 1A comprises a refrigerant circuit (not shown) to which a compressor, a heat source-side heat exchanger, an expansion valve, and a utilization-side heat exchanger (all not shown) are connected through piping. Due to driving by the compressor, the air conditioner 1A circulates a refrigerant in the refrigerant circuit to execute a refrigeration cycle. The air conditioner 1A comprises a high pressure sensor. When high pressure of the refrigeration cycle rises abnormally, the high pressure sensor detects the abnormal rise of the high pressure and outputs a high pressure abnormality signal to the power converter circuit 2A. The power converter circuit 2A stops driving of the compressor. As a result, the refrigeration cycle stops. The high pressure sensor is not limited to any system as long as the high pressure sensor has a function of outputting the fact that a high pressure state exists. As an example of the above, in the present embodiment, the high pressure sensor will be described as a high-pressure switch 400 which outputs a presence/absence of a high pressure abnormality in states of ON (a high pressure abnormality detection signal is outputted upon detection of high pressure abnormality)/OFF (a high pressure abnormality detection signal is not outputted).

A motor M is connected to the power converter circuit 2A. The compressor included in the air conditioner 1A is driven by the motor M. The power converter circuit 2A comprises a converter circuit 10A, an inverter circuit 20, a smoothing circuit 30A, a current-limiting circuit 40, a control unit 300A, a coil L, and shunt resistors R2 and R3.

The control unit 300A comprises a CPU (Central Processing Unit), an EEPROM (Electrically Erasable Programmable Read Only Memory), and the like. The CPU executes a control program stored in the EEPROM in advance in order to control operations of the converter circuit 10A the inverter circuit 20, and the like.

The converter circuit 10A is connected to a three-phase four-wire AC power supply E3 via input lines Lr, Ls, Lt (first to third input lines) corresponding to respective phases of R, S, T and a neutral line Ln. In addition, the converter circuit 10A is connected to the inverter circuit 20 and to a smoothing capacitor C that constitutes the smoothing circuit 30A via a positive-side DC power line L1 and a negative-side DC power line L2.

The converter circuit 10A comprises upper arm-side switching elements Trp, Ttp and lower arm-side switching elements Trn, Ttn. The upper arm-side switching elements Trp, Ttp are respectively provided between the input lines Lr, Lt and the positive-side DC power line L1. The upper arm-side switching elements Trp, Ttp are, for example, IGBTs (Insulated Gate Bipolar Transistors). The lower arm-side switching elements Trn, Ttn are respectively provided between the negative-side DC power line L2 and the input lines Lr, Lt. The lower arm-side switching elements Trn, Ttn are, for example, IGBTs.

Moreover, while pairs (a pair made up of Trp and Trn and a pair made up of Ttp and Ttn) of the switching elements are respectively provided on upper and lower arms of the R phase and the T phase in the present embodiment, pairs of the switching elements need only be respectively provided on any two phases among the three phases of R, S, T. In other words, a total of two pairs of the switching elements need only be provided.

Anodes of diodes Drp, Dtp, Drn, Dtn are respectively connected to the emitters of the upper arm-side switching elements Trp, Ttp and the lower arm-side switching elements Trn, Ttn. Respective collectors of the upper arm-side switching elements Trp, Ttp are connected to the input lines Lr, Lt. Respective collectors of the lower arm-side switching elements Trn, Ttn are connected to the negative-side DC power line L2. Respective cathodes of the diodes Drp, Dtp are connected to the positive-side DC power line L1. Respective cathodes of the diodes Dm, Dtn are connected to the input lines Lr, Lt. In addition, a diode Dsp is provided on the upper arm of the S phase. A diode Dsn is provided on the lower arm of the S phase.

Since the upper arm-side switching elements Trp, Ttp, the lower arm-side switching elements Trn, Ttn, and the diodes Drp, Dtp, Dm, Dtn are connected as described above, the upper arm-side switching elements Trp, Ttp make a current pathway conductive in only one direction from the input lines Lr, Lt to the positive-side DC power line L1 in a conductive state. In addition, the lower arm-side switching elements Trn, Ttn make a current pathway conductive in only one direction from the negative-side DC power line L2 to the input lines Lr, Lt in a conductive state. However, the upper arm-side switching elements Trp, Ttp and the lower arm-side switching elements Trn, Ttn are not limited to switching elements which make current pathways conductive in only the directions described above and may instead be bidirectional energizing elements that enable energization in two directions including toward the side of the positive-side DC power line L1 and toward the side of the negative-side DC power line L2.

The control unit 300A generates, as appropriate, a predetermined energization angle signal or PWM (Pulse Width Modulation) signal that is synchronized with a power supply phase as a drive signal. In addition, the control unit 300A outputs the drive signal to respective gates of the upper arm-side switching elements Trp, Ttp and the lower arm-side switching elements Trn, Ttn to appropriately switch the switching elements. Switching control of the upper and lower arm-side switching elements (the upper arm-side switching elements and the lower arm-side switching elements) of the converter circuit 10A will be described in detail later.

The smoothing capacitor C of the smoothing circuit 30A is, for example, an electrolytic capacitor. The smoothing capacitor C is connected to a load side of the converter circuit 10A and supplies power to the inverter circuit 20 as a voltage supply. In other words, the smoothing capacitor C smoothes power outputted by the converter circuit 10A by temporally storing and then releasing the power outputted by the converter circuit 10A. Moreover, since using a high breakdown voltage capacitor as the smoothing capacitor C increases cost, in the present embodiment, two capacitors that are not high breakdown voltage capacitors are provided in series. By providing two capacitors connected in series in this manner, breakdown voltage characteristics that are comparable to using one high breakdown voltage capacitor as the smoothing capacitor can be achieved. Furthermore, by connecting the current-limiting circuit at a connection point between the two capacitors provided in series, low-voltage charging can be performed.

The inverter circuit 20 is a voltage-type inverter circuit. The inverter circuit 20 is connected to the motor M via output lines Lu, Lv, Lw corresponding to respective phases of U, V, W. In addition, the inverter circuit 20 is connected to the converter circuit 10A and the smoothing capacitor C via the positive-side DC power line L1 and the negative-side DC power line L2.

The inverter circuit 20 comprises upper arm-side switching elements Tup, Tvp, Twp, lower aim-side switching elements Tun, Tvn, Twn, and an inverter gate drive IC 200. The upper arm-side switching elements Tup, Tvp, Twp are respectively provided between the positive-side DC power line L1 and the output lines Lu, Lv, Lw. The upper arm-side switching elements Tup, Tvp, Twp are, for example, IGBTs. The lower arm-side switching elements Tun, Tvn, Twn are respectively provided between the output lines Lu, Lv, Lw and the negative-side DC power line L2. The lower arm-side switching elements Tun, Tvn, Twn are, for example, IGBTs.

Anodes of diodes Dup, Dvp, Dwp, Dun, Dvn, Dwn are respectively connected to emitters of the upper arm-side switching elements Tup, Tvp, Twp and the lower arm-side switching elements Tun, Tvn, Twn. Cathodes of the diodes Dup, Dvp, Dwp, Dun, Dvn, Dwn are respectively connected to collectors of the upper arm-side switching elements Tup, Tvp, Twp and the lower arm-side switching elements Tun, Tvn, Twn. In other words, diodes are connected in inverse-parallel to each of the upper and lower arm-side switching elements of the inverter circuit 20.

The inverter gate drive IC 200 receives a control signal from the control unit 300A and appropriately generates a PWM signal in accordance with the control signal as a drive signal. The inverter gate drive IC 200 outputs the drive signal to respective gates of the upper arm-side switching elements Tup, Tvp, Twp and the lower arm-side switching elements Tun, Tvn, Twn to appropriately open or close the switching elements. In other words, the inverter circuit 20 appropriately switches each of the upper and lower arm-side switching elements, converts DC power outputted from the smoothing capacitor C into AC power with a voltage and a frequency corresponding to a drive state of the motor, and outputs the AC power to windings of respective phases of the motor M. Accordingly, directions of winding currents of the respective phases of U, V, W of the motor M that is, for example, a three-phase brushless DC motor (directions in which currents iu, iv, iw respectively flow) are switched and the motor M rotationally drives.

The current-limiting circuit 40 is a circuit provided in order to prevent an inrush current from flowing to the smoothing capacitor C at the start of energization of the power converter circuit 2A. In this case, an inrush current refers to a spike-like large current which flows when charge is not stored in the smoothing capacitor C. The current-limiting circuit 40 is provided on the neutral line Ln. The current-limiting circuit 40 is constructed by connecting a current-limiting resistor R1 and a current-limiting switch 84C in series. The current-limiting switch is not limited to any system as long as the current-limiting switch has a function of reliably connecting and cutting off the current-limiting circuit. In the present embodiment, as an example thereof, an electromagnetic relay will be described as the current-limiting switch. Hereinafter, the current-limiting switch will be described as being a current-limiting relay (84C).

The control unit 300A closes the current-limiting relay 84C at the start of energization of the power converter circuit 2A. Accordingly, a current that flows in the current-limiting circuit is suppressed by the current-limiting resistor R1 and flows to the smoothing capacitor C. As a result, charges gradually accumulate in the smoothing capacitor C. In the present embodiment, the control unit 300A performs control involving opening the current-limiting relay 84C after the start of energization of the power converter circuit 2A and upon a lapse of a predetermined period of time in which an inrush current can be suppressed. However, a timing at which the control unit 300A opens the current-limiting relay 84C is not limited to a timing based on the lapse of a predetermined period of time as described above. As the timing described above, a wide variety of timings can be applied as long as an inrush current can be suppressed such as a point where voltage of the smoothing capacitor C is charged to or above a predetermined value or a point where an inrush current value during current-limiting falls to or below a predetermined value (this similarly applies to the respective embodiment below).

The coil L is provided between the converter circuit 10A and the smoothing circuit 30A on the positive-side DC power line L1. The coil L is a reactor provided in order to smooth current from the converter circuit 10A.

The shunt resistor R2 is provided between the converter circuit 10A and the smoothing capacitor C on the negative-side DC power line L2. The shunt resistor R3 is provided between the smoothing capacitor C and the inverter circuit 20 on the negative-side DC power line L2. The shunt resistor R2 and the shunt resistor R3 respectively measure a value of a current flowing in the converter circuit 10A and a value of a current flowing in the inverter circuit 20. The shunt resistor R2 and the shunt resistor R3 are used to provide control or protection of the converter and the inverter.

Moreover, an indoor unit (not shown) included in the air conditioner 1 that is provided inside an air-conditioned room is generally provided with an indoor remote controller (not shown) which is capable of communicating with a control unit (not shown) of the air conditioner. By operating the indoor remote controller, a user can turn the air conditioner 1 on or off, set an air conditioning temperature, and the like. The control unit (not shown) itself acts as the control unit 300A which issues commands regarding operation states of the power converter circuit. Alternatively, communication is carried out between a separately-provided control unit 300A and the control unit described above to issue commands regarding operation states of the power converter circuit.

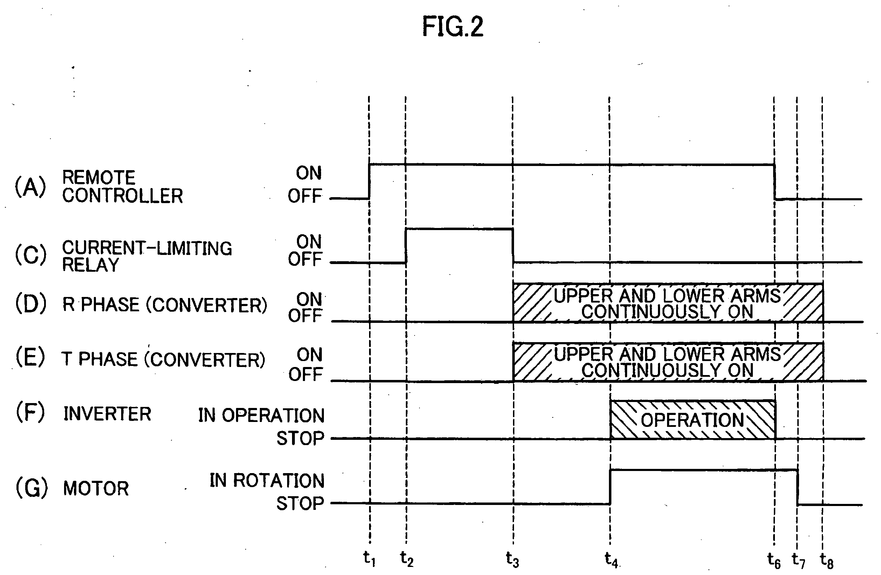

Control of switching of the upper and lower arm-side switching elements of the converter circuit 10A and the like by the control unit 300A will be described with reference to Fig. 2. Fig. 2 is a time chart showing behavior of each pair of upper and lower arm-side switching elements of the R phase and the T phase and the like during a period from start of energization of the power converter circuit 2A to stop of charging of the smoothing capacitor C. (A) represents a state of the indoor remote controller,(C) represents a state of the current-limiting relay 84C, (D) represents a state of the pair of upper and lower arm-side switching elements Trp and Trn of the R phase connected to the input line Lr, (E) represents a state of the pair of upper and lower arm-side switching elements Ttp and Ttn of the T phase connected to the input line Lt, (F) represents a state of the respective upper and lower arm-side switching elements of the inverter circuit 20, and (G) represents a state of the motor M.

When the user turns on the indoor remote controller in order to start air conditioning (time t₁), the control unit 300A closes the current-limiting relay 84C. Accordingly, energization of the power converter circuit 2A is started. At the same time, the control unit 300A fixes the respective pairs of upper and lower arm-side switching elements Trp, Trn and Ttp, Ttn of the R phase and the T phase to a non-conductive state. Accordingly, accumulation of charges in the smoothing capacitor C is started (time t₂). In other words, the control unit 300A performs control in which only the S phase not provided with switching elements is placed in a conductive state. As a result, the control unit 300A prevents an inrush current from flowing to the smoothing capacitor C by ensuring that currents always flow through the current-limiting resistor R1.

Moreover, in this case, the configuration of the conductive state is not limited to the pair of upper and lower arm-side switching elements of the S phase. Alternatively, the pair of upper and lower arm-side switching elements of any one of the phases among the respective pairs of upper and lower arm-side switching elements of the R, S, T phases may be configured so as to enter a conductive state. For example, the pair of upper and lower arm side of any one phase of the respective pairs of upper and lower arm sides of the R, T phases may be provided with diodes in a similar manner to the S phase. In this case, switching elements are provided on the respective pairs of upper and lower arm sides of the other two phases. The switching elements are to be subjected by the control unit 300A to control similar to the conduction/non-conduction control of the respective pairs of upper and lower arm-side switching elements Tip, Trn and Ttp, Ttn of the R phase and the T phase described earlier.

Next, the control unit 300A opens the current-limiting relay 84C and, at the same time, fixes the respective pairs of upper and lower arm-side switching elements of the R phase and the T phase in a conductive state (time t₃). In the present embodiment, the time t₃ at which the current-limiting relay 84C is opened is a time at which the control unit 300A has measured the lapse of a predetermined period of time described above (a predetermined period of time in which an inrush current can be suppressed) using a built-in timer or the like from the point at which the current-limiting relay 84C had been closed at time t₂ (from the point at which energization of the power converter circuit 2A had been started) (as described earlier, the timing at which the current-limiting relay 84C is opened is riot limited to this timing control).

Once accumulation of charges in the smoothing capacitor C prior to inverter operation is finished, the control unit 300A starts switching control of the respective upper and lower arm-side switching elements of the inverter circuit 20 (start of operation of the inverter circuit 20, time t₄). Accordingly; driving of the motor M is started and normal operation of the air conditioner 1A is started.

When the user turns off the indoor remote controller in order to stop air conditioning (time t₆), the control unit 300A places the respective upper and lower arm-side switching elements of the inverter circuit 20 in a non-conductive state. Accordingly, supply of power to the motor M is stopped (time t₆). However, since reflux of energy of motor inductance and refrigerant circulation in the refrigerant circuit do not stop immediately, the motor M stops after briefly continuing inertia operation (time t₇).

In order to ensure safety when stopping an operation in preparation for maintenance of a power converter, desirably, accumulation of charges in the smoothing capacitor C is stopped when the motor M is stopped to discharge the charge stored in the capacitor C. To this end, the control unit 300A subsequently places the respective pairs of upper and lower arm-side switching elements Trp, Trn and Ttp, Ttn of the R phase and the T phase in a non-conductive state and discharges the capacitor C using a discharge circuit (not shown) (time t₈). Moreover, when stopping charging of the capacitor C in this manner (time t₈), the control unit 300A need only control switching of each of the switching elements Trp, Trn, Ttp, Ttn so that the upper and lower arms of at least two phases of the three phases including the R phase, the T phase, and the S phase comprising the diodes Dsp, Dsn enter a non-conductive state.

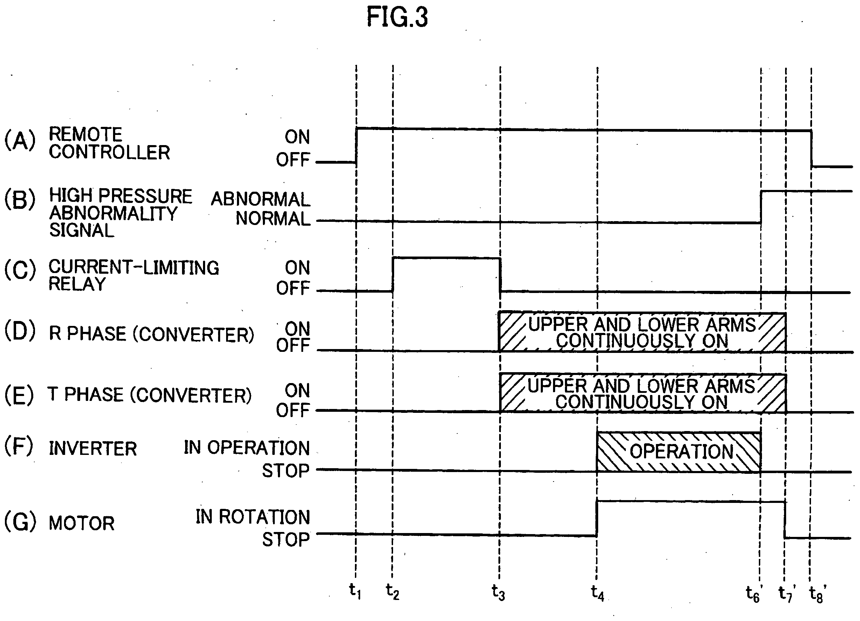

Control of opening and closing of the upper and lower arm-side switching elements of the converter circuit 10A and the like by the control unit 300A when the high-pressure switch 400 is activated will be described with reference to Fig. 3. Fig. 3 is a time chart showing behavior of each pair of upper and lower arm-side switching elements of the R phase and the T phase and the like during a period from start of energization of the power converter circuit 2A to stop of the motor M when the high-pressure switch 400 is activated. (B) represents a state of a high pressure abnormality signal outputted when the high-pressure switch 400 is activated. Otherwise, the states represented by (A) to (G) correspond to Fig. 2.

Since control from the user turning on the indoor remote controller in order to start air conditioning (time t₁) to the start of normal operation of the air conditioner 1A (time t₄) is the same as the control described with reference to Fig. 2, a description thereof will be omitted.

When the high-pressure switch 400 detects an abnormal rise in high pressure of a refrigeration cycle and is activated, the high-pressure switch 400 outputs a high pressure abnormality signal to the control unit 300A. At the same time, the control unit 300A places the respective upper and lower arm-side switching elements of the inverter circuit 20 in a non-conductive state and stops the supply of power to the motor M (time t₆'). Subsequently, in order to stop accumulation of charges in the smoothing capacitor C, the control unit 300A places the respective pairs of upper and lower arm-side switching elements Trp, Trn and Ttp, Ttn of the R phase and the T phase in a non-conductive state (time t₇').

When stopping charging of the capacitor C in this manner (time t₇'), the control unit 300A may control switching of each of the switching elements Trp, Trn, Ttp, Ttn so that either the upper arm-side switching elements Trp, Ttp of both the R phase and the T phase or the lower arm-side switching elements Trn, Ttn of both the R phase and the T phase enter a non-conductive state.

While the switching elements are placed in a non-conductive state at time t₇', a similar effect can be produced by placing the switching elements in a non-conductive state at time t₆' that is a timing at which the supply of power to the motor M is stopped.

The fact that air conditioning had stopped due to a high pressure abnormality is displayed on a display unit or the like included in the indoor remote controller so as to be visible to the user. The user having confirmed the display turns off the indoor remote controller and stops the operation of the air conditioner 1A (time t₈').

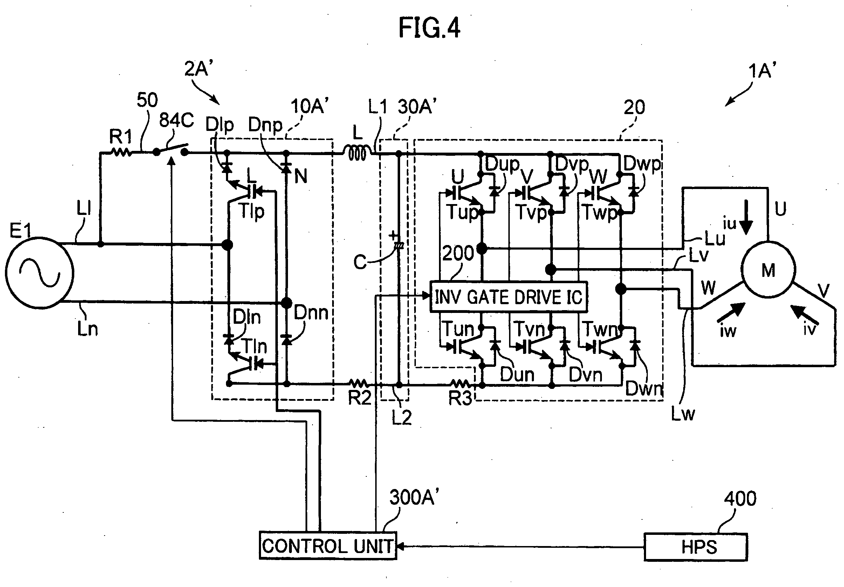

The above description concerns an example of the power converter circuit 2A connected to the three-phase four-wire AC power E3. However, operations according to the first embodiment (Fig. 2 and Fig. 3) can also be applied to a power converter circuit 2A' connected to a single-phase AC power supply E1. A schematic configuration of the power converter circuit 2A' in the power supply circuit included in an air conditioner 1A' is shown in Fig. 4. The power converter circuit 2A' shares the same configuration as the power converter circuit 2A with the exception of a configuration of a converter circuit 10A' that is connected to the single-phase AC power supply E1, a configuration of a smoothing circuit 30A', and the fact that a current-limiting circuit 50 is connected between an input line L1 and the positive-side DC power line L1 instead of on the neutral line. Alternatively, the current-limiting circuit 50 may be connected to the negative-side DC power line L2. In addition, two current-limiting circuits may be provided, namely, a current-limiting circuit connected to the positive-side DC power line L1 and a current-limiting circuit connected to the negative-side DC power line L2.

The converter circuit 10A' is connected to the single-phase AC power supply E1 via the input line L1 corresponding to an L phase and an input line Ln corresponding to an N phase. In addition, the converter circuit 10A' is connected to the inverter circuit 20 and to a smoothing capacitor C that constitutes the smoothing circuit 30A' via the positive-side DC power line L1 and the negative-side DC power line L2.

The converter circuit 10A' comprises an upper arm-side switching element Tlp and a lower arm-side switching element Tln. The upper arm-side switching element Tlp is provided between the input line L1 and the positive-side DC power line L1. The upper arm-side switching element Tlp is, for example, an IGBT. The lower arm-side switching element Tln is provided between the negative-side DC power line L2 and the input line L1. The lower arm-side switching element Tln is, for example, an IGBT. In addition, a diode Dnp is provided on an upper arm of the N phase and a diode Dnn is provided on a lower arm of the N phase.

Anodes of diodes Dlp, Dln are respectively connected to the emitters of the upper arm-side switching element Tlp and the lower arm-side switching element Tln. A collector of the upper arm-side switching element Tlp is connected to the input line L1. A collector of the lower arm-side switching element Tln is connected to the negative-side DC power line L2. A cathode of the diode Dlp is connected to the positive-side DC power line L1 and a cathode of the diode Dln is connected to the input line L1.

According to this configuration, in a similar manner to the converter circuit 10A connected to the three-phase AC power supply E3, the upper arm-side switching element Tlp switches between conduction and non-conduction of a current pathway that flows from the input line L1 to the positive-side DC power line L1 in a conductive state, and the lower arm-side switching element Tln switches between conduction and non-conduction of a current pathway that flows from the negative-side DC power line L2 to the input line Ln in a conductive state.

The smoothing circuit 30A' comprises a smoothing capacitor C. The smoothing capacitor C is, for example, an electrolytic capacitor. The smoothing capacitor C is connected to a load side of the converter circuit 10A' and supplies power to the inverter circuit 20 as a voltage supply. In other words, the smoothing capacitor C smoothes power outputted by the converter circuit 10A by temporally storing and then releasing the power outputted by the converter circuit 10A.

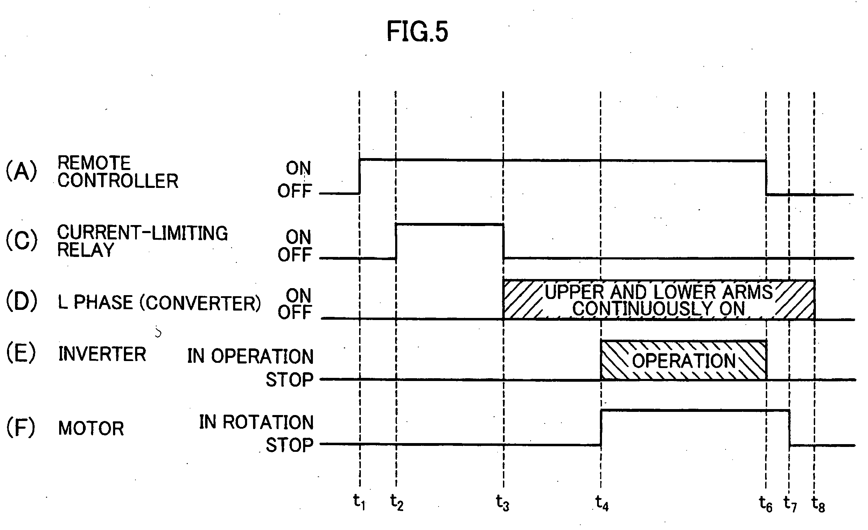

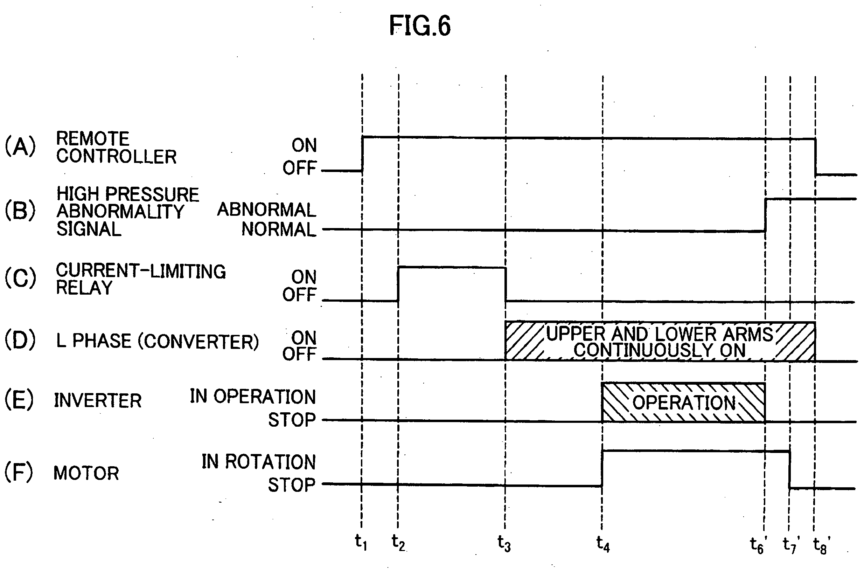

Control of switching of switching elements in the converter circuit 10A' and the like which is performed by the control unit 300A' included in the power converter circuit 2A' is shown in Fig. 5 and Fig. 6.

Fig. 5 is a time chart showing behavior of the pair of upper and lower arm-side switching elements of the L phase and the like during a period from start of energization of the power converter circuit 2A' to stop of charging of the smoothing capacitor C. (A) represents a state of the indoor remote controller, (C) represents a state of the current-limiting relay 84C, (D) represents a state of the pair of upper and lower arm-side switching elements Tlp and Tln of the L phase connected to the input line L1, (E) represents a state of the respective upper and lower arm-side switching elements of the inverter circuit 20, and (F) represents a state of the motor M. Moreover, times t₁ to t₈ respectively correspond to times t₁ to t₈ in Fig. 2.

Fig. 6 is a time chart showing behavior of a pair of upper and lower arm-side switching elements of the N phase and the like during a period from start of energization of the power converter circuit 2A' to stop of the motor M when the high-pressure switch 400 is activated. (B) represents a state of a high pressure abnormality signal outputted when the high-pressure switch 400 is activated. Otherwise, the states represented by (A) to (F) correspond to Fig. 5. Moreover, times t₁ to t₈' respectively correspond to times t₁ to t₈' in Fig. 3.

As shown in Fig. 5 and Fig. 6, the control unit 300A' performs, on the pair of upper and lower arm-side switching elements Tlp and Tln of the L phase, control similar to the control performed by the control unit 300A on the respective pairs of upper and lower arm-side switching elements Trp, Trn and Ttp, Ttn of the R phase and the T phase in the converter circuit 10A connected to the three-phase AC power supply E3.

However, when an arm to which only a diode is connected exists on the side of a current-limiting circuit as in the case of the present embodiment, a current may potentially flow from the power line side to the current-limiting circuit depending on a phase relationship or a positive/negative relationship among the respective phases of the power line. Therefore, the current-limiting relay 84C must be turned off at a timing at which the arm to which only a diode is connected becomes conductive. Alternatively, unwilling conduction must be prevented by using a unidirectional energizing element in the current-limiting circuit.

In reality, a high-accuracy detecting circuit is required to accurately detect a power supply phase or a positive/negative relationship. For this reason, an embodiment connected to a single-phase AC power supply as is the case of the present embodiment or an embodiment connected to a three-phase three-wire AC power supply to be described later adopts a configuration where the current-limiting relay 84C is constituted by a switching element capable of unidirectional energization or a configuration where the current-limiting relay 84C is constituted by a circuit that combines an electromagnetic relay and a unidirectional energizing element. Adopting such a configuration enables a current to be sent unidirectionally from a power line to which the current-limiting circuit is connected to a DC power line and prevents a current from flowing in reverse from the power line side to the current-limiting circuit regardless of the phase relationship or a positive/negative relationship among the respective phases of the power line. As a result, a stable current-limiting operation can be performed with a simple circuit configuration.

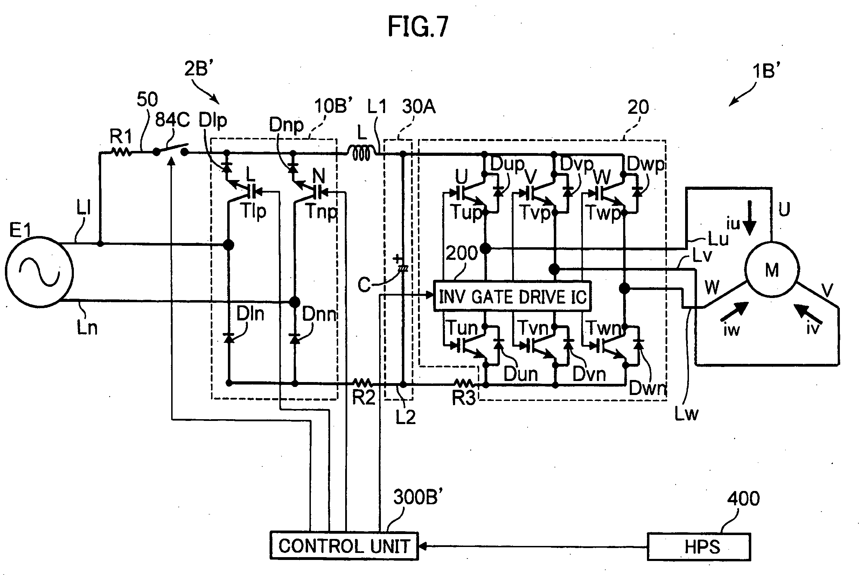

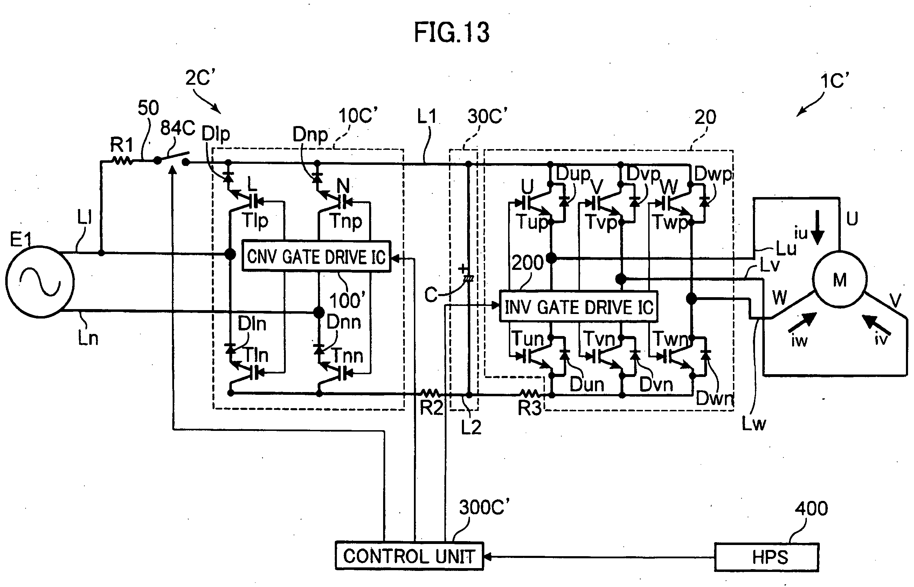

In addition, when stopping accumulation of charges in the smoothing capacitor C upon stop of the motor M (time t₈) in the switching control shown in Fig. 5 and Fig. 6, the control unit 300A' need only control the current-limiting relay (84C) and control switching of the respective elements so that the upper and lower arm-side switching elements of the L phase enter a non-conductive state. Moreover, a control unit 300B' of a power converter circuit 2B' shown in Fig. 7 and a control unit 300C' of a power converter circuit 2C' shown in Fig. 13 (to be described later) also need only perform switching control in a similar manner when stopping charging of the smoothing capacitor C (time tg).

According to the first embodiment, a large electromagnetic relay as a power switch can be eliminated from the power converter circuits 2 and 2'. As a result, the following effects (1) to (3) can be obtained. (1) Since there is no longer a risk of welding-induced stiction or degrading of the moving contact of the electromagnetic relay previously used as the power switch, the reliability of the converter circuits 10A and 10A' can be improved. (2) Noise generated when the moving contact opens and closes can be prevented from propagating to a low current circuit such as a control circuit of the power converter circuit and, in particular, to a low current circuit which shares the input lines Lr, Ls, Lt, Ll, Ln that act as connection wires to the commercial power supply E1 or E3 with the converter circuit 10A or 10A' and which is connected to a power supply branching from the input lines Lr, Ls, Lt, Ll, Ln. (3) A circuit board of the power converter circuit 2 can be downsized.

In addition, according to the first embodiment, the respective switching elements included in the converter circuits 10A and 10A' function as power switches. Therefore, charging of the smoothing capacitor C can be stopped without having to use a large electromagnetic relay as a power switch.

Fig. 7 is a block diagram showing a schematic configuration of a power converter circuit 2B' in a power supply circuit included in an air conditioner 1B'. The power converter circuit 2B' that is connected to a single-phase AC power supply E1 differs from the power converter circuit 2A' in a configuration of a converter circuit 10B'. Specifically, in the converter circuit 10B', upper arm-side switching elements Tlp, Tnp which are, for example, IGBTs are respectively provided between input lines Ll, Ln and the positive-side DC power line L1. In the converter circuit 10B', switching elements are not provided between the negative-side DC power line L2 and the input lines Ll, Ln. Moreover, wire connections of the current-limiting circuit 50 are similar to those of the power converter circuit 2A' according to the first embodiment.

Anodes of diodes Dlp and Dnp are respectively connected to emitters of the upper arm-side switching elements Tlp and Tnp. Respective collectors of the upper arm-side switching elements Tlp and Tnp are connected to the input lines Ll and Ln.

Diodes Dln and Dnn are respectively. provided on lower arms of the L phase and the N phase. Cathodes of the diodes Dln, Dnn are respectively connected to the input lines L1, Ln, and anodes of the diodes Dln, Dnn are respectively connected to the negative-side DC power line L2.

According to this configuration, the upper arm-side switching elements Tlp and Tnp make a current pathway conductive in only one direction from the input lines L1 and Ln to the positive-side DC power line L1 in a conductive state. This is similar to the power converter circuit 2A' according to the first embodiment. Since the configuration other than the converter circuit 10B' is similar to that of the power converter circuit 2A', a description thereof will be omitted.

The configuration of the converter circuit 10B' in the power converter circuit 2B' differs from the configuration of the converter circuit 10A' in the power converter circuit 2A'. Therefore, switching control of the switching elements in the converter circuit 10B' which is performed by the control unit 300B' in the power converter circuit 2B' differs from the switching control of the switching elements in the converter circuit 10A' which is performed by the control unit 300A' in the power converter circuit 2A'.

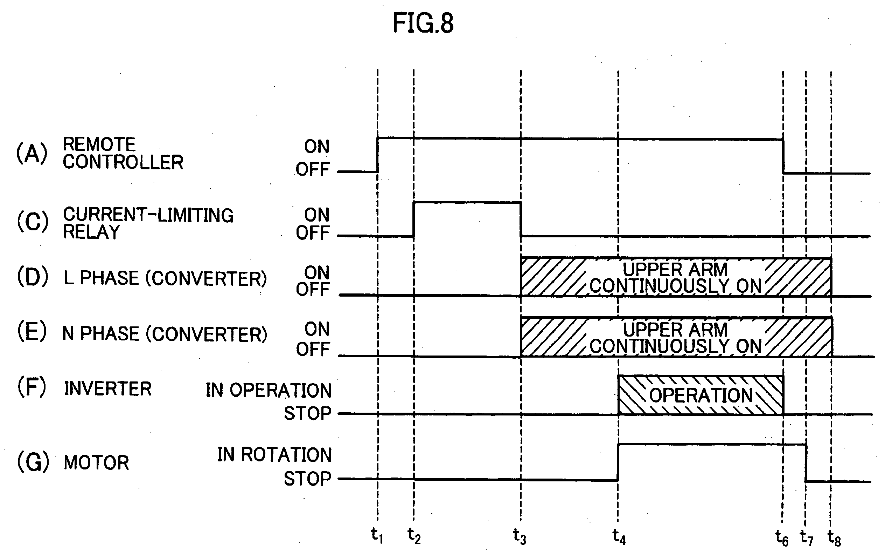

Fig. 8 is a time chart showing behavior of upper arm-side switching elements of the L phase and the N phase and the like during a period from start of energization of the power converter circuit 2B' to stop of charging of the smoothing capacitor C. (A) represents a state of the indoor remote controller, (C) represents a state of the current-limiting relay 84C, (D) represents a state of the upper arm-side switching element Tlp of the L phase connected to the input line L1, (E) represents a state of the upper arm-side switching element Tnp of the N phase connected to the input line Ln, (F) represents a state of the respective upper and lower arm-side switching elements of the inverter circuit 20, and (G) represents a state of the motor M. Moreover, times t₁ to t₈ respectively correspond to times t₁ to t₈ in Fig. 5.

When the user turns on the indoor remote controller in order to start air conditioning (time t₁), the control unit 300B' closes the current-limiting relay 84C and, at the same time, fixes the upper arm-side switching elements Tlp and Tnp of the L phase and the N phase to a non-conductive state to start accumulation of charges in the smoothing capacitor C (time t₂).

Next, the control unit 300B' opens the current-limiting relay 84C and, at the same time, fixes the upper arm-side switching elements Tlp and Tnp of the L phase and the N phase in a conductive state (time t₃). The time t₃ at which the current-limiting relay 84C is opened is, for example, a time at which the control unit 300B' has measured the lapse of the predetermined period of time described earlier (a predetermined period of time in which an inrush current can be suppressed) using a built-in timer or the like from the point at which the current-limiting relay 84C had been closed at time t₂ (from the point at which energization of the power converter circuit 2B' had been started).

Once accumulation of charges in the smoothing capacitor C is finished, the control unit 300B' starts switching control of the respective upper and lower arm-side switching elements of the inverter circuit 20 (time t₄). Accordingly, driving of the motor M is started and normal operation of the air conditioner 1B' is started.

When the user turns off the indoor remote controller in order to stop air conditioning (time t₆), the control unit 300B' places the respective upper and lower arm-side switching elements of the inverter circuit 20 in a non-conductive state and stops supply of power to the motor M (time t₆). The motor M stops after briefly continuing inertia operation (time t₇). Next, the control unit 300B' places the upper arm-side switching elements Tlp and Tnp of the L phase and the N phase in a non-conductive state (time t₈).

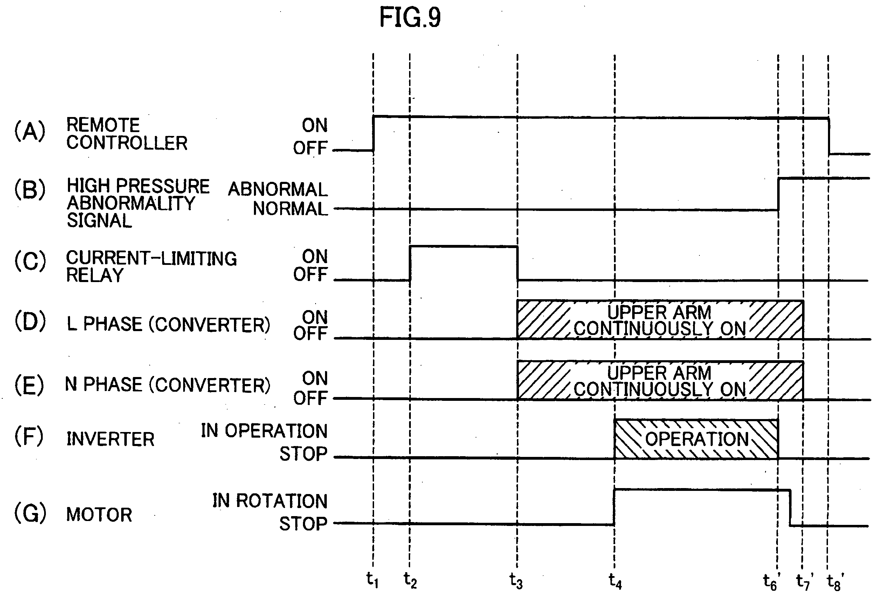

Fig. 9 is a time chart showing behavior of upper arm-side switching elements of the L phase and the N phase and the like during a period from start of energization of the power converter circuit 2B' to stop of the motor M when the high-pressure switch 400 is activated. (B) represents a state of a high pressure abnormality signal outputted when the high-pressure switch 400 is activated. Otherwise, the states represented by (A) to (G) correspond to Fig. 8. Moreover, times t₁ to t₈. respectively correspond to times t₁ to t₈, in Fig. 6.

Since control from the user turning on the indoor remote controller in order to start air conditioning (time t₁) to the start of normal operation of the air conditioner 1 B' (time t₄) is the same as the control described with reference to Fig. 8, a description thereof will be omitted.

As shown in Fig. 9, when the high-pressure switch 400 is activated, the control unit 300B' places the respective upper and lower arm-side switching elements of the inverter circuit 20 in a non-conductive state and stops the supply of power to the motor M (time t₆'). Next, in order to stop accumulation of charges in the smoothing capacitor C, the control unit 300B' places upper arm-side switching elements Tlp and Tnp of an L phase and the N phase in a non-conductive state (time t₇').

The fact that air conditioning had stopped due to a high pressure abnormality is displayed on, for example, a display unit included in the indoor remote controller. In a similar manner to the air conditioner 1A' according to the first embodiment, the user having confirmed the display turns off the indoor remote controller and stops the operation of the air conditioner 1B' (time t₈').

A similar effect to the configuration according to the first embodiment can also be produced by the configuration described earlier.

Moreover, only the lower arm-side element of the N phase may be fixed to a conductive state in the power converter circuit 2B'. In this case, the pair of upper and lower arm-side elements of the L phase and the upper arm-side element of the N phase act as switching elements that are switchable between conduction and non-conduction. In addition, for example, a diode or the like is used as the lower arm-side element of the N phase.

In other words, when stopping accumulation of charges in the smoothing capacitor C upon stop of the motor M (time t₈) in the switching control shown in Fig. 8 and Fig. 9, the control unit 300B' need only control switching of the respective elements so that the pair of upper and lower arm-side switching elements of the L phase and the upper arm-side element of the N phase remain in a non-conductive state and the current-limiting relay (84C) enters a non-conductive state.

### <Second embodiment>

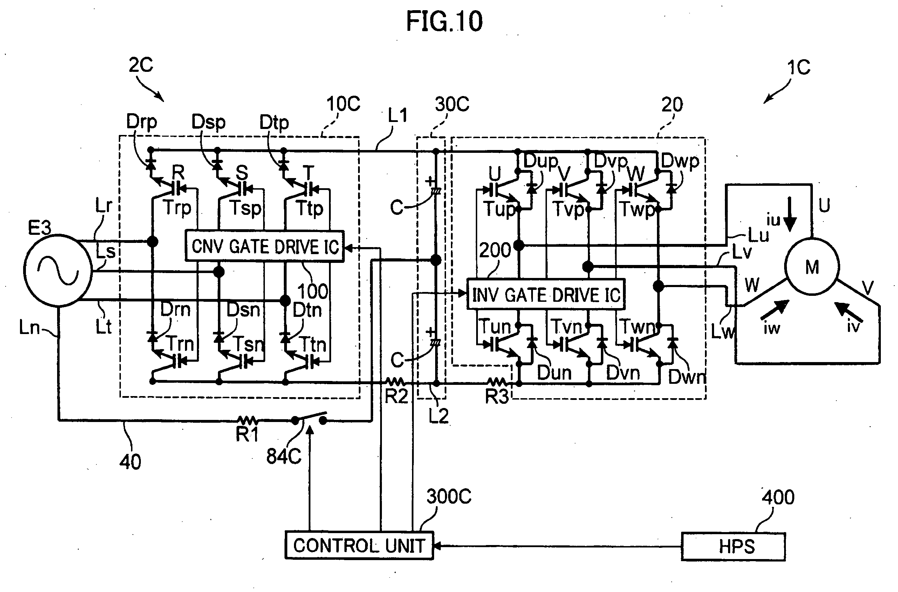

Fig. 10 is a block diagram showing a schematic configuration of a power converter circuit 2C in a power supply circuit included in an air conditioner 1C according to a second embodiment of the present invention. The power converter circuit 2C differs from the power converter circuit 2A in a configuration of a converter circuit 10C. The converter circuit 10C is a so-called current-type converter circuit which comprises an IGBT connected in series to a diode on all upper and lower arms of three phases. In the power converter circuit 2C, the converter circuit 10C is capable of suppressing generation of power supply harmonics through, for example, PWM control.

In addition, the power converter circuit 2C comprises a smoothing circuit 30C similar to that of the power converter circuit 2A. The smoothing capacitor C is, for example, an electrolytic capacitor. The power converter circuit 2C has a similar configuration to the power converter circuit 2A in that the smoothing capacitor C is connected to a load side of the converter circuit 10C, the smoothing capacitor C supplies power to the inverter circuit 20 as a voltage supply, two capacitors that are not high breakdown voltage capacitors are provided in series to constitute the smoothing capacitor C, and the like.

The converter circuit 10C will be described in detail below. The converter circuit 10C comprises upper arm-side switching elements Trp, Tsp, Ttp, lower arm-side switching elements Trn, Tsn, Ttn, and a converter gate drive IC 100. The upper arm-side switching elements Trp, Tsp, Ttp are respectively provided between input lines Lr, Ls, Lt and the positive-side DC power line L1. The upper arm-side switching elements Trp, Tsp, Ttp are, for example, IGBTs. The lower arm-side switching elements Tm, Tsn, Ttn are respectively provided between the negative-side DC power line L2 and the input lines Lr, Ls, Lt. The lower arm-side switching elements Trn, Tsn, Ttn are, for example, IGBTs.

Anodes of diodes Drp, Dsp, Dtp, Dm, Dsn, Dtn are respectively connected to emitters of the upper arm-side switching elements Trp, Tsp, Ttp and the lower arm-side switching elements Trn, Tsn, Ttn. Respective collectors of the upper arm-side switching elements Trp, Tsp, Ttp are connected to the input lines Lr, Ls, Lt. Respective collectors of the lower arm-side switching elements Trn, Tsn, Ttn are connected to the negative-side DC power line L2. Respective cathodes of the diodes Drp, Dsp, Dtp are connected to the positive-side DC power line L1, and respective cathodes of the diodes Drn, Dsn, Dtn are connected to the input lines Lr, Ls, Lt.

Since the upper arm-side switching elements Trp, Tsp, Ttp, the lower arm-side switching elements Tm, Tsn, Ttn, and the diodes Drp, Dsp, Dtp, Dm, Dsn, Dtn are connected as described above, the upper arm-side switching elements Trp, Tsp, Ttp make a current pathway conductive in only one direction from the input lines Lr, Ls, Lt to the positive-side DC power line L1 in a conductive state. In addition, the lower arm-side switching elements Trn, Tsn, Ttn make a current pathway conductive in only one direction from the negative-side DC power line L2 to the input lines Lr, Ls, Lt in a conductive state. However, the upper arm-side switching elements Trp, Tsp, Ttp and the lower arm-side switching elements Tm, Tsn, Ttn are not limited to switching elements which make current pathways conductive in only the directions described above and may instead be bidirectional energizing elements that enable energization in two directions including toward the side of the positive-side DC power line L1 and toward the side of the negative-side DC power line L2. Alternatively, a circuit capable of bidirectional energization may be constructed by further connecting, in parallel, a circuit that performs energization only in a direction opposite to that described above. This configuration can be made comparable to a one-way energizing element by turning off a one-way energizing side.

The converter gate drive IC 100 receives a control signal from the control unit 300C and appropriately generates a PWM signal in accordance with the control signal as a drive signal. The converter gate drive IC 100 outputs the drive signal to respective gates of the upper arm-side switching elements Trp, Tsp, Ttp and the lower arm-side switching elements Trn, Tsn, Ttn to appropriately switch the switching elements. In other words, unlike a diode bridge-type converter circuit, the converter circuit 10C switches the upper arm-side switching elements Trp, Tsp, Ttp and the lower arm-side switching elements Trn, Tsn, Ttn and actively performs waveform control to rectify AC power. Therefore, generation of power supply harmonics due to rectification can be suppressed compared to a converter circuit that includes an arm solely constituted by a diode bridge.

Moreover, descriptions of the inverter circuit 20, the current-limiting circuit 40, the high-pressure switch 400, and the shunt resistor R2 and the shunt resistor R3 which share the same configurations as those in the power converter circuit 2A according to the first embodiment will be omitted.

The configuration of the converter circuit 10C included in the power converter circuit 2C differs from the configuration of the converter circuit 10A included in the power converter circuit 2A. Therefore, switching control of the switching elements in the converter circuit 10C which is performed by the control unit 300C included in the power converter circuit 2C differs from the switching control of the switching elements in the converter circuit 10A which is performed by the control unit 300A included in the power converter circuit 2A.

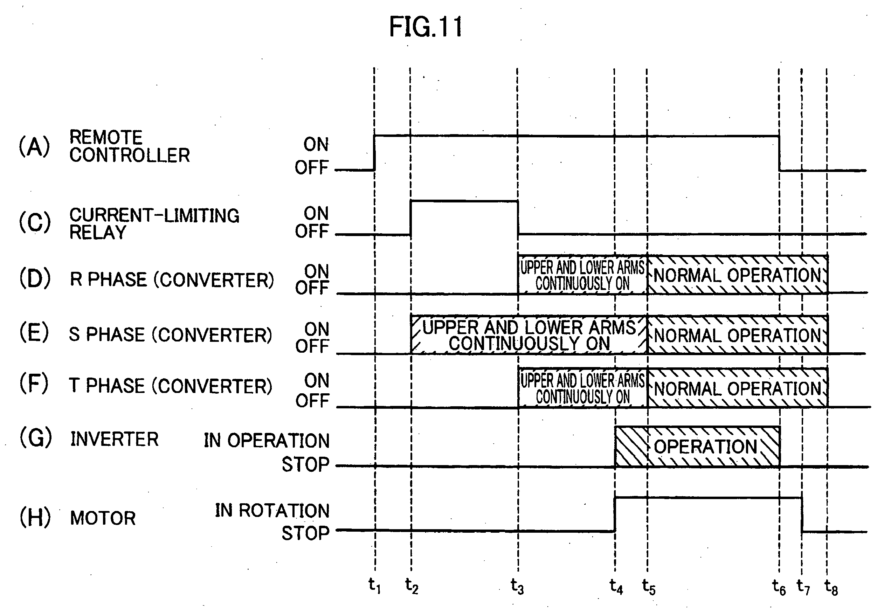

Switching control of the upper and lower arm-side switching elements of the converter circuit 10C will be described with reference to Fig. 11. Fig. 11 is a time chart showing behavior of respective pairs of upper and lower arm-side switching elements of the R, S, T phases and the like during a period from start of energization of the power converter circuit 2C to stop of charging of the smoothing capacitor C. (A) represents a state of the indoor remote controller, (C) represents a state of the current-limiting relay 84C, (D) represents a state of the pair of upper and lower arm-side switching elements Trp and Trn of the R phase connected to the input line Lr, (E) represents a state of the pair of upper and lower arm-side switching elements Tsp and Tsn of the S phase connected to the input line Ls, (F) represents a state of the pair of upper and lower arm-side switching elements Ttp and Ttn of the T phase connected to the input line Lt, (G) represents a state of the respective upper and lower arm-side switching elements of the inverter circuit 20, and (H) represents a state of the motor M. Moreover, times t₁ to t₈ respectively correspond to times t₁ to t₈ in Fig. 2.

When the user turns on the indoor remote controller in order to start air conditioning (time t₁), the control unit 300C closes the current-limiting relay 84C. At the same time, among the respective pairs of upper and lower arm-side switching elements of the R, S, T phases, the control unit 300C fixes only the pair of upper and lower arm-side switching elements Tsp and Tsn of the S phase in a conductive state and fixes the pairs of upper and lower arm-side switching elements Trp, Trn and Ttp, Ttn of the remaining R and T phases in a non-conductive state. Accordingly, accumulation of charges in the smoothing capacitor C is started (time t₂). In other words, the control unit 300C performs control in which only the pair of upper and lower arm-side switching elements Tsp and Tsn of the S phase is fixed in a conductive state and only the S phase is placed in a conductive state. As a result, the control unit 300C prevents an inrush current from flowing to the smoothing capacitor C by ensuring that currents always flow through the current-limiting resistor R1 in a similar manner to the power converter circuit 2A according to the first embodiment. Moreover, in this case, a switching element that is fixed to a conductive state by the control unit 300C is not limited to the pair of upper and lower arm-side switching elements of the S phase. Among the respective pairs of upper and lower arm-side switching elements of the R, S, T phases, the control unit 300C may alternatively fix only the pair of upper and lower arm-side switching elements of any one of the phases in a conductive state and fix the pairs of upper and lower arm-side switching elements of the remaining two phases in a non-conductive state.

Next, the control unit 300C opens the current-limiting relay 84C and, at the same time, fixes the upper and lower arm-side switching elements of all three phases in a conductive state (time t₃). In the present embodiment, the time t₃ is, for example, a time at which the control unit 300C has measured the lapse of the predetermined period of time described earlier (a predetermined period of time in which an inrush current can be suppressed) using a built-in timer or the like from the point at which the current-limiting relay 84C had been closed at time t₂ (from the point at which energization of the power converter circuit 2C had been started). Once accumulation of charges in the smoothing capacitor C is finished, the control unit 300C starts switching control of the respective upper and lower arm-side switching elements of the inverter circuit 20 (start of operation of the inverter circuit 20, time t₄). Accordingly, driving of the motor M is started. Moreover, for example, switching according to a 120-degree energization method that is synchronized with a zero cross of the power supply may be performed as control of the respective upper and lower arm-side switching elements from time t₃ to time t₄.

Subsequently, the control unit 300C starts a synchronized operation in which the converter circuit 10C and the inverter circuit 20 are synchronized and controlled, and starts switching control of the respective upper and lower arm-side switching elements of the converter circuit 10C (start of normal operation of the air conditioner 1, time t₅). The power converter circuit 2C according to the second embodiment differs from the power converter circuit 2A according to the first embodiment in this regard.

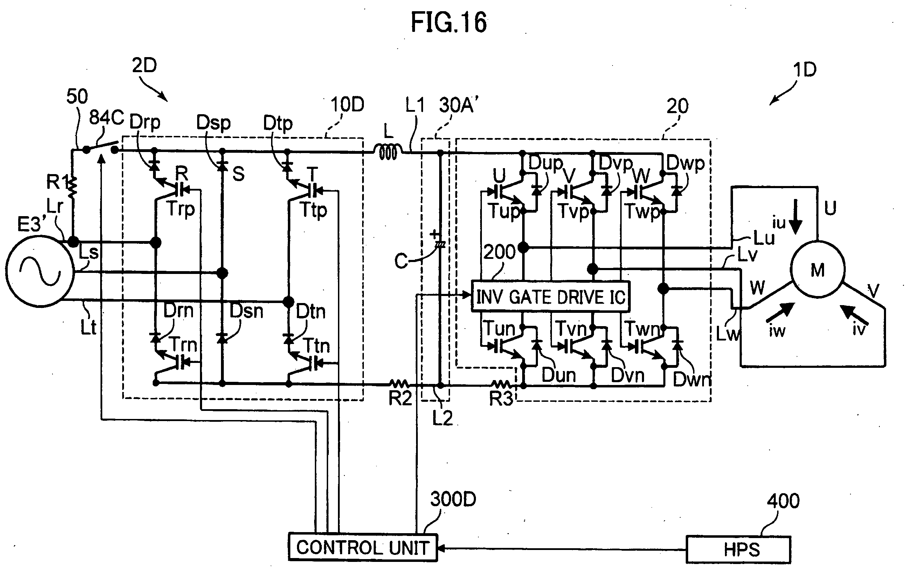

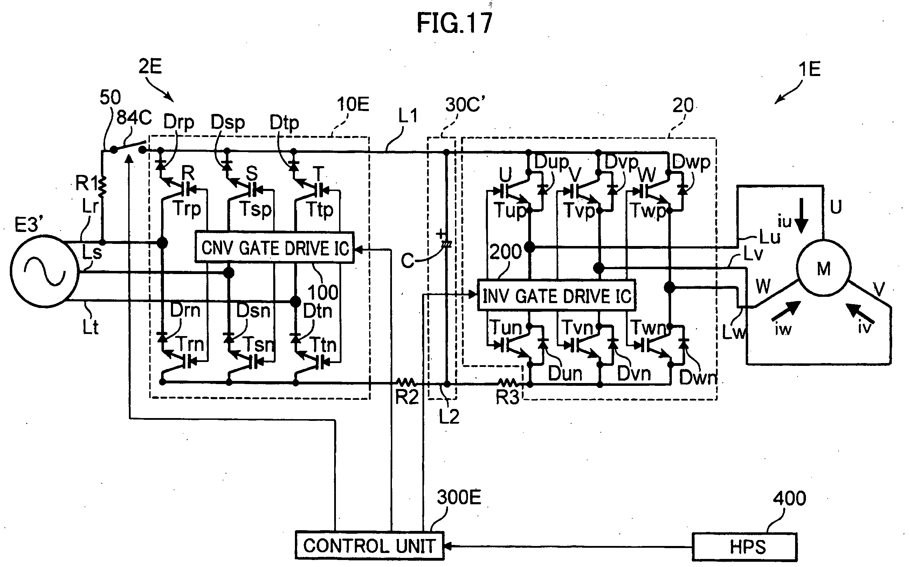

When the user turns off the indoor remote controller in order to stop air conditioning (time t₆), the control unit 300C places the respective upper and lower arm-side switching elements of the inverter circuit 20 in a non-conductive state and stops supply of power to the motor M (time t₆). The motor M stops after briefly continuing inertia operation (time t₇). Subsequently, in order to stop accumulation of charges in the smoothing capacitor C when stopping the motor M, the control unit 300C places the upper and lower arm-side switching elements of all three phases R, S, T in a non-conductive state (time t₈). When stopping charging of the capacitor C in this manner (time t₈), the control unit 300C may control switching of each of the switching elements Trp, Trn, 'Tsp, Tsn, Ttp, Ttn so that the upper and lower arms of at least two phases among the three phases R, S, T enter a non-conductive state. Moreover, a control unit 300D of a power converter circuit 2D shown in Fig. 16 and a control unit 300E of a power converter circuit 2E shown in Fig. 17 (to be described later) may also perform switching control in a similar manner when stopping charging of the smoothing capacitor C (time t₈).

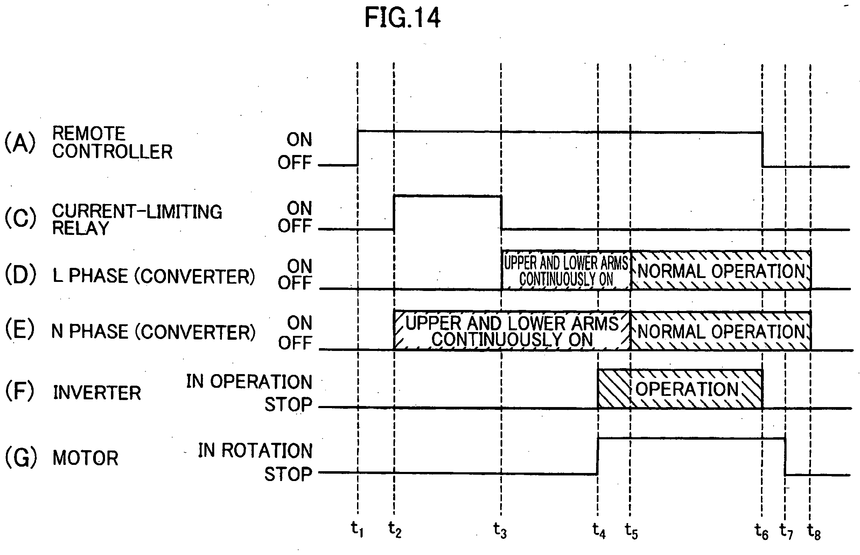

In addition, when stopping charging of the capacitor C in this manner (time t₈), the control unit 300C may control switching of each of the switching elements Trp, Tm, Tsp, Tsn, Ttp, Ttn so that either the upper arm-side switching elements Trp, Tsp, Ttp of all three phases R, S, T or the lower arm-side switching elements Trn, Tsn, Ttn of all three phases R, S, T enter a non-conductive state. This also applies to the control performed by the control unit 300E of the power converter circuit 2E shown in Fig. 14 to be described below.

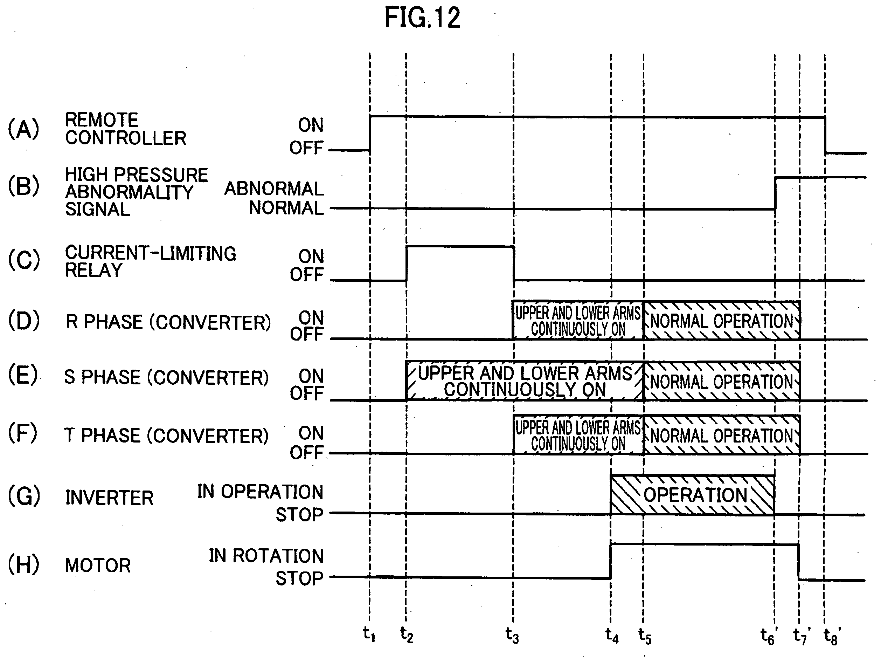

Opening/closing control of the upper and lower arm-side switching elements of the converter circuit 10C when the high-pressure switch 400 is activated will be described with reference to Fig. 12. Fig. 12 is a time chart showing behavior of each pair of upper and lower arm-side switching elements of the R, S, T phases and the like during a period from start of energization of the power converter circuit 2C to stop of the motor M when the high-pressure switch 400 is activated. (B) represents a state of a high pressure abnormality signal outputted when the high-pressure switch 400 is activated. Otherwise, the states represented by (A) to (H) correspond to Fig. 11. Moreover, times t₁ to t₈' respectively correspond to times t₁ to t₈' in Fig. 3.

Since control from the user turning on the indoor remote controller in order to start air conditioning (time t₁) to the start of normal operation of the air conditioner 1C (time t₅) is the same as the control described with reference to Fig. 11, a description thereof will be omitted.

When the high-pressure switch 400 detects an abnormal rise in high pressure of a refrigeration cycle and is activated, the high-pressure switch 400 outputs a high pressure abnormality signal to the control unit 300C. At the same time, the control unit 300C places the respective upper and lower arm-side switching elements of the inverter circuit 20 in a non-conductive state and stops the supply of power to the motor M (time t₆'). Subsequently, in order to stop accumulation of charges in the smoothing capacitor C, the control unit 300C places the upper and lower arm-side switching elements of all three phases R, S, T in a non-conductive state (time t₇'),

When stopping charging of the capacitor C in this manner (time t₇'), the control unit 300C may control switching of each of the switching elements Trp, Trn, Tsp, Tsn, Ttp, Ttn so that the upper and lower arms of at least two phases among the three phases R, S, T enter a non-conductive state. Moreover, a control unit 300D of a power converter circuit 2D shown in Fig. 16 and a control unit 300E of a power converter circuit 2E shown in Fig. 17 (to be described later) may also perform switching control in a similar manner when stopping charging of the smoothing capacitor C (time t₈).

In addition, when stopping charging of the capacitor C in this manner (time t₇'), the control unit 300C may control switching of each of the switching elements Trp, Trn, Tsp, Tsn, Ttp, Ttn so that either the upper arm-side switching elements Trp, Tsp, Ttp of all three phases R, S, T or the lower arm-side switching elements Trn, Tsn, Ttn of all three phases R, S, T enter a non-conductive state. This also applies to the control performed by the control unit 300E of the power converter circuit 2E shown in Fig. 14 to be described below.

The fact that air conditioning had stopped due to a high pressure abnormality is displayed on, for example, a display unit included in the indoor remote controller. In a similar manner to the air conditioner 1A according to the first embodiment, the user having confirmed the display turns off the indoor remote controller and stops the operation of the air conditioner 1 C (time t₈').

Moreover, in a similar manner to the first embodiment, the configuration of the second embodiment can also be applied to a power converter circuit 2C' that is connected to the single-phase AC power supply E1. A schematic configuration of the power converter circuit 2C' in the power supply circuit included in an air conditioner 1C' is shown in Fig. 13. The power converter circuit 2C' differs from the power converter circuit 2C in a configuration of a converter circuit 10C' connected to the single-phase AC power supply E1, in a configuretion of a smoothing circuit 30C', and in wire connections of a current-limiting circuit 50. The smoothing circuit 30C' shares the same configuration as the smoothing circuit 30A' shown in Fig. 4. Otherwise, the configuration of the power converter circuit 2C' is similar to that of the power converter circuit 2C. Moreover, wire connections of the current-limiting circuit 50 are similar to those of the power converter circuits 2A' and 2B'.

The converter circuit 10C' comprises upper arm-side switching elements Tlp, Tnp, lower arm-side switching elements Tln, Tnn, and a converter gate drive IC 100'. The upper arm-side switching elements Tlp, Tnp are respectively provided between the input lines L1, Ln and the positive-side DC power line L1. The upper arm-side switching elements Tlp, Tnp are, for example, IGBTs. The lower arm-side switching elements Tln, Tnn are respectively provided between the negative-side DC power line L2 and the input lines L1, Ln. The lower arm-side switching elements Tln, Tnn are, for example, IGBTs.

Anodes of diodes Dlp, Dnp, Dln, Dnn are respectively connected to emitters of the upper arm-side switching elements Tlp, Tnp and the lower arm-side switching elements Tln, Tnn. Respective collectors of the upper arm-side switching elements Tlp and Tnp are connected to the input lines L1 and Ln. Respective collectors of the lower arm-side switching elements Tln and Tnn are connected to the negative-side DC power line L2. Respective cathodes of the diodes Dlp and Dnp are connected to the positive-side DC power line L1, and respective cathodes of the diodes Dln and Dnn are connected to the input lines L1 and Ln.

According to this configuration, in a similar manner to the converter circuit 10C connected to the three-phase AC power supply E3, the upper arm-side switching elements Tlp and Tnp make a current pathway conductive in only one direction from the input lines L1 and Ln to the positive-side DC power line L1 in a conductive state, and the lower arm-side switching elements Tln and Tnn make a current pathway conductive in only one direction from the negative-side DC power line L2 to the input lines L1 and Ln in a conductive state.

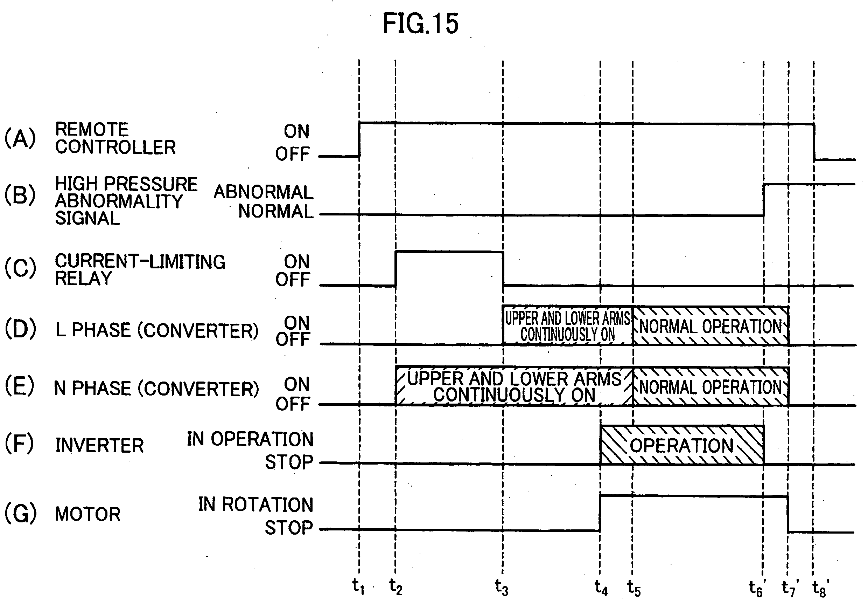

Control of opening and closing of switching elements in the converter circuit 10C' and the like which is performed by the control unit 300C' included in the power converter circuit 2C' is shown in Fig. 14 and Fig. 15.

Fig. 14 is a time chart showing behavior of respective upper and lower arm-side switching elements and the like during a period from start of energization of the power converter circuit 2C' to stop of charging of the smoothing capacitor C. (A) represents a state of the indoor remote controller, (C) represents a state of the current-limiting relay 84C, (D) represents a state of the upper and lower arm-side switching elements Tlp and Tln of the L phase connected to the input line L1, (E) represents a state of the upper and lower arm-side switching elements Tnp and Tnn of the N phase connected to the input line Ln, (F) represents a state of the respective upper and lower arm-side switching elements of the inverter circuit 20, and (G) represents a state of the motor M. Moreover, times t₁ to t₈ respectively correspond to times t₁ to t₈ in Fig. 11.

Moreover, when stopping charging of the capacitor C in this manner (time t₈), the control unit 300C' may control switching of each of the switching elements Tlp, Tnp, Tln, Tnn so that either the upper arm-side switching elements Tlp, Tnp of both the L phase and the N phase or the lower arm-side switching elements Tln, Tnn of both the L phase and the N phase enter a non-conductive state.

Fig. 15 is a time chart showing behavior of respective upper and lower arm-side switching elements and the like during a period from start of energization of the power converter circuit 2C' to stop of the motor M when the high-pressure switch 400 is activated. (B) represents a state of a high pressure abnormality signal outputted when the high-pressure switch 400 is activated. Otherwise, the states represented by (A) to (G) correspond to Fig. 14. Moreover, times t₁ to t₈' respectively correspond to times t₁ to t₈' in Fig. 12.

As shown in Fig. 14 and Fig. 15, the control unit 300C' performs, on the upper and lower arm-side switching elements Tnp and Tnn of the N phase, control similar to that performed by the control unit 300C on the upper and lower arm-side switching elements of the S phase in the converter circuit 10C connected to the AC power supply E3. In addition, the control unit 300C' performs, on the upper and lower arm-side switching elements Tlp and Tln of the L phase, control similar to that performed by the control unit 300C on the upper and lower arm-side switching elements of the R phase and the T phase in the converter circuit 10C.

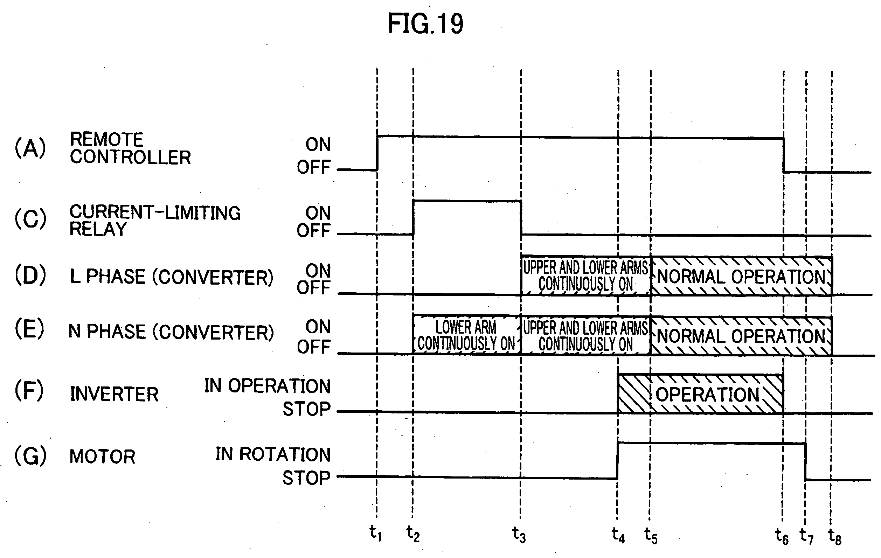

Moreover, the power converter circuit 2C' may control the respective upper and lower arm-side switching elements and the like during a period from start of energization of the power converter circuit 2C' to stop of charging of the smoothing capacitor C as depicted in the time chart shown in Fig. 19.

Specifically, when the user turns on the indoor remote controller in order to start air conditioning (time t₁), the control unit 300C' closes the current-limiting relay 84C. Accordingly, energization of the power converter circuit 2C' is started. At the same time, the control unit 300C' fixes, to a conductive state, the lower arm-side switching element Tnn of the N phase which is a switching element of an arm on a side to which the current-limiting circuit 50 is not connected in a phase to which the current-limiting circuit 50 is not connected. In addition, the control unit 300C' places the remaining switching elements or, in other words, the pair of upper and lower arm-side switching elements Tlp, Tln of the L phase and the upper arm-side switching element Tnp of the N phase in a non-conductive state and starts accumulation of charges in the smoothing capacitor C (time t₂). As a result, the control unit 300C' prevents an inrush current from flowing to the smoothing capacitor C by ensuring that currents always flow through the current-limiting resistor R1.

Next, the control unit 300C' opens the current-limiting relay 84C and, at the same time, fixes all of the switching elements of the L phase and the N phase in a conductive state (time t₃). Similarly, in the present embodiment, the time t₃ is, for example, a time at which the control unit 300C' has measured the lapse of the predetermined period of time described earlier (a predetermined period of time in which an inrush current can be suppressed) using a built-in timer or the like from the point at which the current-limiting relay 84C had been closed at time t₂ (from the point at which energization of the power converter circuit 2C' had been started).

Once accumulation of charges in the smoothing capacitor C is finished, the control unit 300C' starts switching control of the respective upper and lower arm-side switching elements of the inverter circuit 20 (start of operation of the inverter circuit 20, time t₄). Accordingly, driving of the motor M is started. Since subsequent control is similar to the control shown in Fig. 14, a description thereof will be omitted.

Moreover, when stopping charging of the capacitor C in this manner (time t₈ in Fig. 14, time t₇' in Fig. 15, time t₈' in Fig. 19), the control unit 300C' may control switching of each of the switching elements Tlp, Tnp, Tln, Tnn so that the current-limiting relay (84C) and either all of the upper arm-side switching elements Tlp, Tnp of the L phase and the N phase or all of the lower arm-side switching elements Tln, Tnn of the L phase and the N phase enter a non-conductive state.

Since the control unit 300C or 300C' switches the respective upper and lower arm-side switching elements and actively performs waveform control to rectify AC power, generation of power supply harmonics due to rectification can be suppressed. Other effects are similar to those produced by the configurations described above.

While air conditioners and power converter circuits according to the first and second embodiments of the present invention have been described above, the present invention is not limited to these embodiments. For example, the configurations described above may take the form of the following modifications.
(1) While a wire connection of the three-phase AC power supply E3 according to the first and second embodiments adopts a three-phase four-wire system, the wire connection of the three-phase AC power supply E3 adopting the three-phase four-wire system can also be applied to a case where the wire connection of the three-phase AC power supply E3 adopts a three-phase three-wire system. Fig. 16 shows a configuration of a power converter circuit 2D resulting from applying a wire connection of a three-phase three-wire system to the configuration of the power converter circuit 2A according to the first embodiment. Fig. 17 shows a configuration of a power converter circuit 2E resulting from applying a wire connection of a three-phase three-wire system to the configuration of the power converter circuit 2C according to the second embodiment.

When the wire connection of the three-phase AC power supply E3 adopting the three-phase four-wire system is applied to a configuration in which the wire connection of the three-phase AC power supply E3 adopts a three-phase three-wire system, in a similar manner to the case of a single phase, the current-limiting circuit 50 is provided between any one of input lines Lr, Ls, Lt and any one of the positive-side DC power line L1 and the negative-side DC power line L2 (in the examples shown in Fig. 16 and Fig. 17, between the input line Lr and the positive-side DC power line L1) instead of on the neutral line Ln.

When wire connection of a three-phase three-wire system is applied to the power converter circuit 2A according to the first embodiment, in order to ensure that currents flow through a current-limiting resistor during a current-limiting operation, switching elements must be provided on upper and lower arms of a phase to which the current-limiting circuit 50 is connected.

Even in these cases, in a similar manner to the power converter circuit 2C shown in Fig. 10, the upper arm-side switching elements Trp, Ttp and the lower arm-side switching elements Trn, Ttn in the power converter circuit 2D are not limited to switching elements which make current pathways conductive in only the directions described above and may instead be bidirectional energizing elements that enable energization in two directions including toward the side of the positive-side DC power line L1 and toward the side of the negative-side DC power line L2. In addition, the upper arm-side switching elements Trp, Tsp, Ttp and the lower arm-side switching elements Trn, Tsn, Ttn in the power converter circuit 2E are not limited to switching elements which make current pathways conductive in only the directions described above and may instead be bidirectional energizing elements that enable energization in two directions including toward the side of the positive-side DC power line L1 and toward the side of the negative-side DC power line L2. Alternatively, a circuit capable of bidirectional energization may be constructed by further connecting, in parallel, a circuit that performs energization only in a direction opposite to that described above. This configuration can be made comparable to a one-way energizing element by turning off a one-way energizing side.

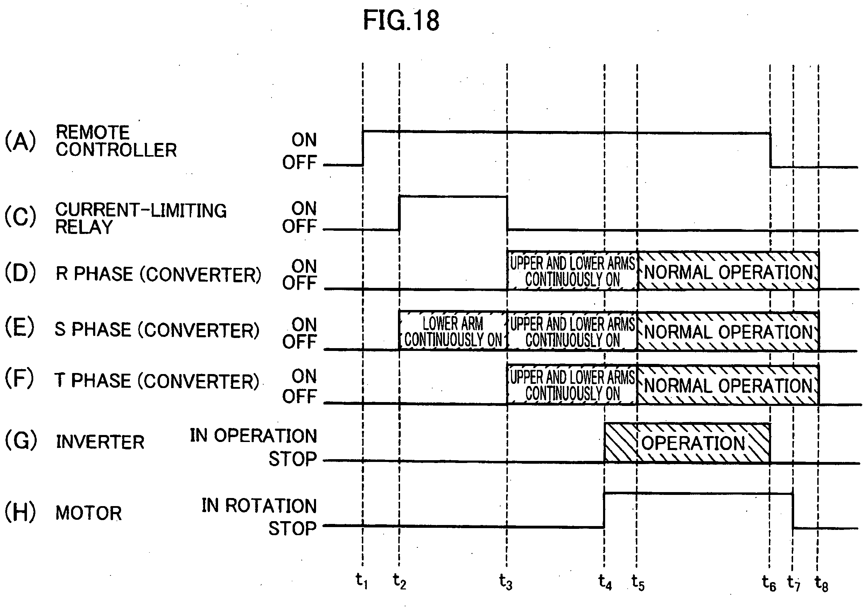

Switching control in a power converter circuit 2E shown in Fig. 17 will be described with reference to the time chart shown in Fig. 18. When the user turns on the indoor remote controller in order to start air conditioning (time t₁), a control unit 300E closes the current-limiting relay 84C and causes energization of the power converter circuit 2E to start. At the same time, the control unit 300E fixes the lower arm-side switching element Tsn of the S phase (a switching element of an arm to which the current-limiting circuit 50 is not connected of at least one phase among phases to which the current-limiting circuit 50 is not connected) to a conductive state, and fixes remaining switching elements or, in other words, the upper arm-side switching elementTsp of the S phase, the pair of upper and lower arm-side switching elements Trp, Trn of the R phase, and the pair of upper and lower arm-side switching elements Ttp, Ttn of the T phase in a non-conductive state to start accumulation of charges in the smoothing capacitor C (time t₂). As a result, the control unit 300E prevents an inrush current from flowing to the smoothing capacitor C by ensuring that currents always flow through the current-limiting resistor R1.

Moreover, in this case, a switching element that is placed in a conductive state by the control unit 300E is not limited to the lower arm-side switching element Tsn of the S phase and may instead be the lower arm-side switching element Ttn of the T phase or both lower arm-side switching elements of the S phase and the T phase. In this case, all of the remaining switching elements are placed in a non-conductive state.

Next, the control unit 300E opens the current-limiting relay 84C and, at the same time, fixes the respective pairs of upper and lower arm-side switching elements of the R phase, S phase, and the T phase in a conductive state (time t₃). Similarly, the time t₃ is a time at which the control unit 300E has measured the lapse of the predetermined period of time described earlier (a predetermined period of time in which an inrush current can be suppressed) using a built-in timer or the like from the point at which the current-limiting relay 84C had been closed at time t₂ (from the point at which energization of the power converter circuit 2A had been started).

Once accumulation of charges in the smoothing capacitor C is finished, the control unit 300E starts switching control of the respective upper and lower arm-side switching elements of the inverter circuit 20 (start of operation of the inverter circuit 20, time t₄). Accordingly, driving of the motor M is started. Since subsequent control is similar to the control by the control unit 300C shown in Fig. 11, a description thereof will be omitted.

Moreover, since control of switching of upper and lower arm-side switching elements of the converter circuit 10D and the like by the control unit 300D included in the power converter circuit 2D shown in Fig. 16 is similar to the control by the control unit 300A, a description thereof will be omitted.
(2) While IGBTs and diodes are connected in series in the converter circuits 10A to 10C' according to the first and second embodiments, a similar function can be provided by using reverse blocking IGBTs in the converter circuits 10A to 10C'.
(3) While a rectifier circuit including an arm having only a diode and a rectifier circuit having switching elements on all arms have been shown in the first and second embodiments, the present invention can also be applied to an indirect matrix converter in addition to the converter circuits 10A and 10C. Moreover, in this case, a capacitor is provided between an inverter unit and a converter unit as a clamp capacitor which constitutes a clamp circuit.

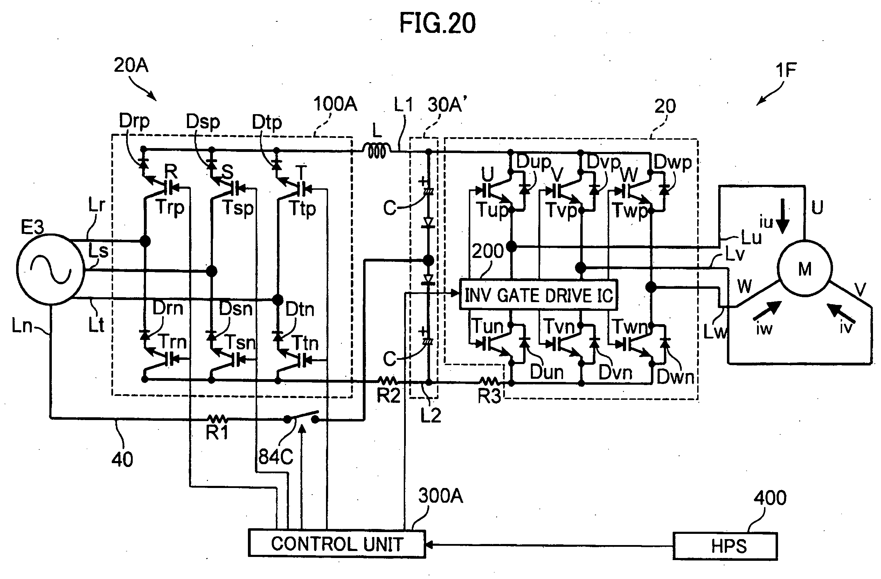

Fig. 20 shows an air conditioner IF comprising an indirect matrix converter 20A as a power converter circuit. The indirect matrix converter 20A comprises a current-type converter 100A, a clamp circuit 30A', and a voltage-type inverter 20.

The current-type converter 100A is connected to a three-phase four-wire AC power supply E3 via input lines Lr, Ls, Lt (first to third input lines) corresponding to respective phases of R, S, T and a neutral line Ln. In addition, the current-type converter 100A is connected via the positive-side DC power line L1 and the negative-side DC power line L2 to the inverter circuit 20 and the clamp circuit 30A'.

Switching operations of the current-type converter 100A are controlled by a control circuit 300A.

In the present embodiment, the current-type converter 100A comprises six sets of elements so as to correspond to upper and lower arms of the three phases, with a diode and an IGBT connected in series in each element. The respective elements are an IGBT Trp and a diode Drp, an IGBT Trn and a diode Drn, an IGBT Tsp and a diode Dsp, an IGBT Tsn and a diode Dsn, an IGBT Ttp and a diode Dtp, and an IGBT Ttn and a diode Dtn.

An emitter of the transistor Trp is connected to an anode of the diode Drp, and a cathode of the diode Drp is connected to the DC power line L1. An emitter of the transistor Tsp is connected to an anode of the diode Dsp, and a cathode of the diode Dsp is connected to the DC power line L1. An emitter of the transistor Ttp is connected to an anode of the diode Dtp, and a cathode of the diode Dtp is connected to the DC power line L1.

An anode of the diode Dm is connected to an emitter of the transistor Trn, and a collector of the transistor Trn is connected to the DC power line L2. An anode of the diode Dsn is connected to an emitter of the transistor Tsn, and a collector of the transistor Tsn is connected to the DC power line L2. An anode of the diode Dtn is connected to an emitter of the transistor Ttn, and a collector of the transistor Ttn is connected to the DC power line L2.

A collector of the transistor Trp is connected to a cathode of the diode Drn. In a similar manner, a collector of the transistor Tsp is connected to a cathode of the diode Dsn. A collector of the transistor Ttp is connected to a cathode of the diode Dtn.

Moreover, while Fig. 20 shows an example in which an anode of a diode is connected to an emitter of an IGBT in each element, a configuration in which a cathode of a diode is connected to a collector of an IGBT can also be adopted.

In addition, reverse blocking IGBTs (RB-IGBTs) can be used in place of the respective elements which are constituted by a diode and an IGBT.

The indirect matrix converter 20A comprises the clamp circuit 30A'. For example, the clamp circuit 30A' comprises an electrolytic capacitor as the clamp capacitor C. For example, the clamp circuit 30A' functions to absorb regenerative energy of a motor.

Switching control of the upper and lower arm-side switching elements of the current-type converter 100A is performed in a similar manner to the switching control performed by the power converter circuit 2C which has been described with reference to Fig. 11 and Fig. 12.

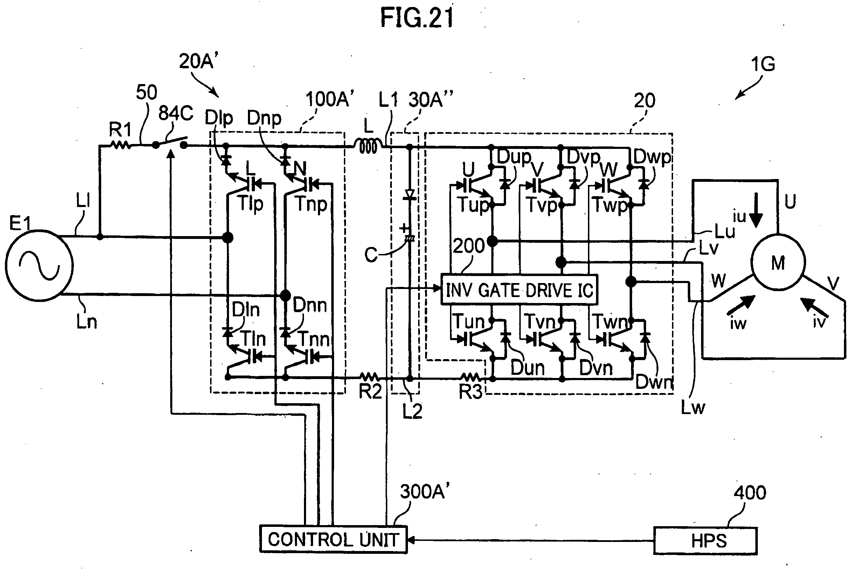

Fig. 21 shows an air conditioner 1 G comprising an indirect matrix converter 20A' connected to the single-phase AC power supply E1. The indirect matrix converter 20A' comprises a current-type converter 100A', a clamp circuit 30A", and the voltage-type inverter 20.

The current-type converter 100A' is connected to the single-phase AC power supply E1 via input lines L1, Ln which respectively correspond to the L and N phases. In addition, the current-type converter 100A' is connected via the positive-side DC power line L1 and the negative-side DC power line L2 to the voltage-type inverter circuit 20 and the clamp circuit 30A". Moreover, the current-limiting circuit 50 is connected between the input line L1 and the positive-side DC power line L1.

Switching operations of the current-type converter 100A' are controlled by a control circuit 300A'.

In the present embodiment, the current-type converter 100A' comprises four sets of elements so as to correspond to upper and lower arms of the input lines Ll**,** Ln from the single-phase AC power supply E1, with a diode and an IGBT connected in series in each element. The respective elements are an IGBT Tlp and a diode Dlp, an IGBT Tln and a diode Dln, an IGBT Tnp and a diode Dnp, and an IGBT Tnn and a diode Dnn.

An emitter of the transistor Tlp is connected to an anode of the diode Dlp, and a cathode of the diode Dlp is connected to the DC power line L1. An emitter of the transistor Tnp is connected to an anode of the diode Dnp, and a cathode of the diode Dnp is connected to the DC power line L1.

An anode of the diode Dln is connected to an emitter of the transistor Tln, and a collector of the transistor Tln is connected to the DC power line L2. An anode of the diode Dnn is connected to an emitter of the transistor Tnn, and a collector of the transistor Tnn is connected to the DC power line L2.

A collector of the transistor Tlp is connected to a cathode of the diode Dln. In a similar manner, a collector of the transistor Tnp is connected to a cathode of the diode Dnn.

Moreover, while Fig. 21 shows an example in which an anode of a diode is connected to an emitter of an IGBT in each element, a configuration in which a cathode of a diode is connected to a collector of an IGBT can also be adopted.

In addition, reverse blocking IGBTs (RB-IGBTs) can be used in place of the respective elements described above which are constituted by a diode and an IGBT.

The indirect matrix converter 20A' comprises the clamp circuit 30A". For example, the clamp circuit 30A" comprises an electrolytic capacitor as the clamp capacitor C. For example, the clamp circuit 30A" functions to absorb regenerative energy of a motor.

Switching control of the upper and lower arm-side switching elements of the current-type converter 100A' is performed in a similar manner to the switching control performed by the power converter circuit 2C' which has been described with reference to Fig. 14 and Fig. 15.
(4) At time t₈ and time t₇', the control unit 300C and the control unit 300C' place all upper and lower arm-side switching elements in a non-conductive state. However, since an object of the control unit 300C and the control unit 300C' is to stop accumulation of charges in the smoothing capacitor C when the motor M stops, the following control may be performed. Specifically, the control by the control unit 300C need only be control such that the current-limiting relay (84C) and only two pairs of upper and lower arm-side switching elements among the respective phases of R, S, T, the current-limiting relay (84C) and only all of the upper arm-side switching elements, or the current-limiting relay (84C) and only all of the lower arm-side switching elements are placed in a non-conductive state. The control by the control unit 300C' need only be control such that the current-limiting relay (84C) and only the pair of upper and lower arm-side switching elements of either the R phase or the N phase, the current-limiting relay (84C) and only all of the upper arm-side switching elements, or the current-limiting relay (84C) and only all of the lower arm-side switching elements are placed in a non-conductive state.

Moreover, the specific configurations described above primarily include invention a structure configured as described below.

The power converter circuit is a power converter circuit which is connected to a three-phase AC power supply (E3') via first to third input lines (Lr, Ls, Lt), and which is connected to a capacitor (C) via a positive-side DC power line (L1) and a negative-side DC power line (L2), and which is connected to at least one current-limiting circuit (50) that is provided between any one of the first to third input lines (Lr, Ls, Lt) and one of the positive-side DC power line (L1) and the negative-side DC power line (L2) and that includes an opening/closing switch (84C) and a current-limiting resistor (R1). The power converter circuit comprises: a switching element (Trp) that is provided on an arm on a side to which the current-limiting circuit (50) is connected of a phase to which the current-limiting circuit (50) is connected and that makes a current pathway between the first to third input lines (Lr, Ls, Lt) and the DC power lines (L1, L2) conductive in a conductive state; at least either switching elements (Tsp, Ttp) that are provided on arms on sides to which the current-limiting circuit is connected of two phases to which the current-limiting circuit is not connected and that make a current pathway from the first to third input lines (Lr, Ls, Lt) to the DC power lines (L1, L2) conductive in a conductive state, or switching elements (Tm, Tsn, Ttn) that are provided on an opposite-side arm in phase with the arm on which the switching element (Trp) is provided and both upper and lower arms of at least one phase among phases to which the current-limiting circuit is not connected and that make a current pathway between the DC power lines (L1, L2) and the first to third input lines (Lr, Ls, Lt) conductive in a conductive state; and control units (300D, 300E) which control switching of the switching elements (Trp, Tsp, Ttp, Trn, Tsn, Ttn) and control opening and closing of the opening/closing switch (84C). In the power converter circuit, the control units (300D, 300E) close the opening/closing switch (84C) until an inrush current becomes suppressible after start of energization of the power converter circuit, and control switching of each of the switching elements (Trp, Trn, Tsp, Tsn, Ttp, Ttn) so that the arm on the side to which the current-limiting circuit (50) is not connected of at least one phase among the phases to which the current-limiting circuit is not connected enters a conductive state and the remaining arms enter a non-conductive state.

According to this mode, the switching elements function as power switches. Therefore, a large electromagnetic relay as a power switch can be eliminated from an input unit of a converter circuit. As a result, the following effects (1) to (3) can be obtained. (1) Since there is no longer a risk of welding-induced stiction or degrading of the moving contact of the electromagnetic relay previously used as the power switch, the reliability of the converter circuit can be improved. (2) Electromagnetic noise generated when the moving contact opens and closes can be prevented from propagating to a low current circuit such as a control circuit of the power converter circuit and, in particular, to a low current circuit which shares a connection wire to a commercial power supply with the converter circuit and which is connected to a power supply branching from the connection wire. (3) A circuit board can be downsized.

Disclosed is further a power converter circuit which is connected to a single-phase AC power supply (E1) via two input lines (Ll, Ln) of an L phase and an N phase, and which is connected to a capacitor (C) via a positive-side DC power line (L1) and a negative-side DC power line (L2), and which is connected to at least one current-limiting circuit (50) that is provided between the input line (Ll) of the L phase and the positive-side DC power line (L1) or between the input line (Ln) of the N phase and the negative-side DC power line (L2) and that includes an opening/closing switch (84C) and a current-limiting resistor (R1). The power converter circuit comprises: switching elements (Tlp) that are provided on an arm on a side to which the current-limiting circuit (50) is connected of a phase to which the current-limiting circuit (50) is connected and that make a current pathway between the input line (Ll, Ln) of the L phase or the N phase and the DC power lines (L1, L2) conductive in a conductive state; switching elements (Tnp, Tln) that are provided at least on any one of an arm on a side to which the current-limiting circuit (50) is connected of a phase to which the current-limiting circuit (50) is not connected and an arm on a side to which the current-limiting circuit (50) is not connected of a phase to which the current-limiting circuit (50) is connected, that make a current pathway from the input line (Ll, Ln) of the L phase or the N phase to the positive-side DC power line (L1) conductive in a conductive state when provided on an upper arm, and that make a current pathway from the negative-side DC power line (L2) to the input line (Ll, Ln) of the L phase or the N phase conductive in a conductive state when provided on a lower arm; and control units (300A', 300B', 300C') that control switching of the switching elements (Tlp, Tln, Tnp) or four elements (Tlp, Tln, Tnp, Tnn) obtained by adding a switching element (Tnn) which makes the input line (Ln) of the N phase and the negative-side DC power line (L2) conductive to each other to the switching elements (Tlp, Tln, Tnp) and that control opening and closing of the opening/closing switch (84C). In the power converter circuit, the control units (300A', 300B', 300C') close the opening/closing switch (84C) until an inrush current becomes suppressible after start of energization of the power converter circuit, and control switching of each of the switching elements (Tlp, Tln, Tnp) so that the arm on the side to which the current-limiting circuit (50) is not connected of the phase to which the current-limiting circuit (50) is not connected enters a conductive state and the remaining arms enter a non-conductive state.

According to this mode, the switching elements function as power switches. Therefore, a large electromagnetic relay as a power switch can be eliminated from an input unit of a converter circuit. As a result, the following effects (1) to (3) can be obtained. (1) Since there is no longer a risk of welding-induced stiction or degrading of the moving contact of the electromagnetic relay previously used as the power switch, the reliability of the converter circuit can be improved. (2) Electromagnetic noise generated when the moving contact opens and closes can be prevented from propagating to a low current circuit such as a control circuit of the power converter circuit and, in particular, to a low current circuit which shares a connection wire to a commercial power supply with the converter circuit and which is connected to a power supply branching from the connection wire. (3) A circuit board can be downsized.

In the power converter circuit, favorably, the upper arm-side switching elements (Trp, Tsp, Ttp) are elements which are provided on all of the upper arms of the three phases and which are respectively capable of making a current pathway conductive in only one direction from the first to third input lines (Lr, Ls, Lt) to the positive-side DC power line (L1) when in a closed state. In this case, favorably, the lower arm-side switching elements (Tm, Tsn, Ttn) are elements which are provided on all of the lower arms of the three phases and which are respectively capable of making a current pathway conductive in only one direction from the negative-side DC power line (L2) to the first to third input lines (Lr, Ls, Lt) when in a closed state. In addition, favorably, the control unit (300C) closes the opening/closing switch (84C) until an inrush current becomes suppressible after start of energization of the power converter circuit, and places one pair among the three pairs of the upper arm-side switching elements (Trp, Tsp, Ttp) and the lower arm-side switching elements (Tm, Tsn, Ttn) connected to the same input lines in a conductive state and places the remaining two pairs in a non-conductive state.

This mode is suitable in a power converter circuit that is a so-called current-type converter or an indirect matrix converter which is capable of suppressing power supply harmonics.

In the power converter circuit, favorably, the upper arm-side switching elements (Trp, Tsp, Ttp) are elements which are provided on all of the upper arms of the three phases and which are respectively capable of making a current pathway conductive in only one direction from the first to third input lines (Lr, Ls, Lt) to the positive-side DC power line (L1) when in a closed state. In this case, favorably, the lower arm-side switching elements (Trn, Tsn, Ttn) are elements which are provided on all of the lower arms of the three phases and which are respectively capable of making a current pathway conductive in only one direction from the negative-side DC power line (L2) to the first to third input lines (Lr, Ls, Lt) when in a closed state. In addition, favorably, the control unit (300E) closes the opening/closing switch (84C) until an inrush current becomes suppressible after start of energization of the power converter circuit, and places at least switching elements (Tsn, Ttn) of an arm on a side to which the current-limiting circuit (50) is not connected among a pair of switching elements provided on upper and lower arms of one phase among phases to which the current-limiting circuit (50) is not connected in a conductive state and places the remaining switching elements in a non-conductive state.

This mode is suitable in a power converter circuit that is a so-called current-type converter or an indirect matrix converter which is capable of suppressing power supply harmonics.

In the power converter circuit, favorably, the switching elements (Tlp, Tln, Tnp, Tnn) are provided on all of the upper and lower arms. In this case, favorably, the control unit (300C') closes the opening/closing switch (84C) until an inrush current becomes suppressible after start of energization of the power converter circuit, and places the switching element (Tnn) on a side to which the current-limiting circuit (50) is not connected of a phase to which the current-limiting circuit (50) is not connected in a conductive state and places the remaining switching elements (Tlp, Tln, Tnp) in a non-conductive state.

This mode is suitable in a power converter circuit that is a so-called current-type converter or an indirect matrix converter which is capable of suppressing power supply harmonics.

In the power converter circuit, favorably, when stopping charging of the capacitor (C), the control units (300A, 300C, 300D, 300E) control switching of each of the switching elements (Trp, Trn, Tsp, Tsn, Ttp, Ttn) so that the upper and lower arms of at least two phases enter a non-conductive state.

According to this mode, since the switching elements function as power switches and stop supply of power from a commercial power supply, charging of the capacitor (C) can be stopped without having to use a large electromagnetic relay as a power switch.

In the power converter circuit, favorably, when stopping charging of the capacitor (C), the control units (300A', 300B', 300C') control switching of each of the switching elements (Tlp, Tln, Tnp, Tnn) so that the upper and lower arms of at least one phase enter a non-conductive state.

According to this mode, since the switching elements function as power switches and stop supply of power from a commercial power supply, charging of the capacitor (C) can be stopped without having to use a large electromagnetic relay as a power switch.

In the power converter circuit, favorably, when stopping charging of the capacitor (C), the control units (300C, 300E) control switching of each of the switching elements (Trp, Tsp, Ttp, Trn, Tsn, Ttn) so that at least either all of the upper arms or all of the lower arms enter a non-conductive state.

According to this mode, in a so-called current-type converter or in an indirect matrix converter which is capable of suppressing power supply harmonics, the switching elements can be made to function as power switches and charging of the capacitor (C) can be stopped without having to use a large electromagnetic relay as a power switch.

In the power converter circuit, favorably, when stopping charging of the capacitor (C), the control unit (300C') controls switching of each of the switching elements (Tlp, Tnp, Tln, Tnn) so that at least either all of the upper arms or all of the lower arms enter a non-conductive state.

According to this mode, in a so-called current-type converter or in an indirect matrix converter which is capable of suppressing power supply harmonics, the switching elements can be made to function as power switches and charging of the capacitor (C) can be stopped without having to use a large electromagnetic relay as a power switch.

In the power converter circuit, favorably, the control units (300A, 300C) set a timing at which the opening/closing switch (84C) is closed until an inrush current becomes suppressible after start of energization as a timing at which a predetermined period of time in which an inrush current becomes suppressible has lapsed after the start of energization.

According to this mode, the control unit controls a period of time during which the opening/closing switch is closed by time measurement as a period of time in which a predetermined amount of time lapses. Therefore, the opening/closing switch can be kept closed in a reliable manner until a timing arrives which is determined in advance as a timing at which an inrush current becomes suppressible after the start of energization. Accordingly, an inrush current can be reliably suppressed.

In the power converter circuit, favorably, the opening/closing switch (84C) is any of a switching element capable of unidirectional energization or a circuit that combines an electromagnetic relay and a unidirectional energizing element.

According to this mode, a current can be sent unidirectionally from a power line to which the current-limiting circuit is connected to a DC power line. As a result, a stable current-limiting operation can be performed regardless of a phase relationship or a positive/negative relationship among respective phases of the power line and without allowing a current to flow in reverse from the power line side to the current-limiting circuit. When a switch is opened or closed by a switching element capable of unidirectional energization, there is no longer a risk of a decline in reliability of the power converter circuit due to welding-induced stiction or degradation of a moving contact and adverse effects of an electromagnetic noise created by contact bounce when the moving contact opens or closes can also be eliminated. In addition, when a switch is opened or closed by a circuit that combines an electromagnetic relay and a unidirectional energizing element, an interposition of the unidirectional energizing element reduces an electrical burden that acts on the moving contact of the electromagnetic relay. Accordingly, a decline in reliability of the power converter circuit due to welding-induced stiction or degradation of a moving contact can be reduced and adverse effects of the electromagnetic noise during opening and closing of the moving contact can also be reduced.

Favorably, the power converter circuit is a power converter circuit of a power supply circuit included in an air conditioner which executes a refrigeration cycle by circulating a refrigerant in a refrigerant circuit to which a compressor, a heat source-side heat exchanger, an expansion valve, and a utilization-side heat exchanger are connected through piping. In this case, favorably, when the control units (300A, 300C, 300D, 300E) receive a high pressure abnormality signal that is outputted when a high pressure sensor (400) which detects an abnormal rise of high pressure of the refrigeration cycle detects the abnormal rise, the control units (300A, 300C, 300D, 300E) control switching of each of the switching elements (Trp, Trn, Tsp, Tsn, Ttp, Ttn) so that the upper and lower arms of at least two phases enter a non-conductive state.

According to this mode, with a power converter circuit which is connected to a three-phase (three-wire system or four-wire system) power supply included in an air conditioner that comprises the high pressure switch and stops the refrigeration cycle when an abnormal rise of the high pressure of the refrigeration cycle occurs, an effect of promptly stopping supply of power can be obtained.

Favorably, the power converter circuit is a power converter circuit of a power supply circuit included in an air conditioner which executes a refrigeration cycle by circulating a refrigerant in a refrigerant circuit to which a compressor, a heat source-side heat exchanger, an expansion valve, and a utilization-side heat exchanger are connected through piping. In this case, favorably, when the control unit (300C) receives a high pressure abnormality signal that is outputted when a high pressure sensor (400) which detects an abnormal rise of high pressure of the refrigeration cycle detects the abnormal rise, the control unit (300C) controls switching of each of the switching elements (Trp, Tsp, Ttp, Trn, Tsn, Ttn) so that at least either all of the upper arms or all of the lower arms enter a non-conductive state.

According to this mode, with a power converter circuit which is connected to a three-phase (three-wire system or four-wire system) power supply included in an air conditioner that comprises the high pressure switch and stops the refrigeration cycle when an abnormal rise of the high pressure of the refrigeration cycle occurs, an effect of promptly stopping supply of power can be obtained.

Favorably, the power converter circuit is a power converter circuit of a power supply circuit included in an air conditioner which executes a refrigeration cycle by circulating a refrigerant in a refrigerant circuit to which a compressor, a heat source-side heat exchanger, an expansion valve, and a utilization-side heat exchanger are connected through piping. In this case, favorably, when the control units (300A', 300B', 300C') receive a high pressure abnormality signal that is outputted when a high pressure sensor (400) which detects an abnormal rise of high pressure of the refrigeration cycle detects the abnormal rise, the control units (300A', 300B', 300C') control switching of each of the switching elements (Tlp, Tln, Tnp, Tnn) so that the upper and lower arms of at least one phase enter a non-conductive state.

This mode is suitable for a converter circuit of a single-phase power supply circuit that is included in an air conditioner which comprises a high pressure switch and which stops the refrigeration cycle when an abnormal rise of high pressure of the refrigeration cycle occurs.

Favorably, the power converter circuit is a power converter circuit of a power supply circuit included in an air conditioner which executes a refrigeration cycle by circulating a refrigerant in a refrigerant circuit to which a compressor, a heat source-side heat exchanger, an expansion valve, and a utilization-side heat exchanger are connected through piping. In this case, favorably, when the control unit (300C') receives a high pressure abnormality signal that is outputted when a high pressure sensor (400) which detects an abnormal rise of high pressure of the refrigeration cycle detects the abnormal rise, the control unit (300C') controls switching of each of the switching elements (Tlp, Tnp, Tln, Tnn) so that at least either all of the upper arms or all of the lower arms enter a non-conductive state.

This mode is suitable for a converter circuit of a single-phase power supply circuit that is included in an air conditioner which comprises a high pressure switch and which stops the refrigeration cycle when an abnormal rise of high pressure of the refrigeration cycle occurs.

The air conditioner according to the present invention is an air conditioner comprising: a motor (M); and the power converter circuit (2A, 2A', 2B', 2C, 2C', 2D, 2E, 20A, 20A') with any one of the configurations above, wherein the power converter circuit (2A, 2A', 2B', 2C, 2C', 2D, 2E, 20A, 20A') includes a capacitor (C) connected to a converter circuit (10A, 10A', 10B', 10C, 10C', 10D, 10E, 100A, 100A') and an inverter circuit (20) connected between the capacitor (C) and the motor (M).

According to this mode, effects due to the power converter circuit can be obtained with an air conditioner comprising a motor and the power converter circuit that includes a capacitor connected to a converter circuit and an inverter circuit connected between the capacitor and the motor.

### Explanation of Reference Numerals

E1 single-phase AC power supply
E3 three-phase AC power supply
1A, 1A', 1B, 1B', 1C, 1C' air conditioner
M inverter motor
2A, 2A', 2B', 2C, 2C', 20A, 20A' power converter circuit
Lr, Ls, Lt, Ln, L1 input line
L1 positive-side DC power line
L2 negative-side DC power line
C smoothing capacitor, clamp capacitor
10A, 10A', 10B, 10B', 10C, 10C', 100A, 100A' converter circuit
Trp, Tsp, Ttp, Tnp, Tlp upper arm-side switching element
Trn, Tsn, Ttn, Tnn, Tln lower arm-side switching element
100 converter gate drive IC
20 inverter circuit
Tup, Tvp, Twp, Tun, Tvn, Twn switching element (inverter-side switching element)
200 inverter gate drive IC
300A, 300A', 300B, 300B', 300C, 300C' control unit
400 high-pressure switch

## Claims

1. A power converter circuit which is connected to a three-phase AC power supply (E3) via first to third input lines (Lr, Ls, Lt) and via a neutral line (Ln) including an opening/closing switch (84C) and a current-limiting resistor (R1) and which is connected to a capacitor (C) via a positive-side DC power line (L1) and a negative-side DC power line (L2), the power converter circuit comprising:
- upper arm-side switching elements (Trp, Tsp, Ttp) which are provided on upper arms of at least two phases among upper arms of three phases and which makes a current pathway from the first to third input lines (Lr, Ls, Lt) to the positive-side DC power line(L1) conductive in a conductive state;
- lower arm-side switching elements (Trn, Tsn, Ttn) which are provided on lower arms of the at least two phases among the three phases and which makes a current pathway from the negative-side DC power line (L2) to the first to third input lines (Lr, Ls, Lt) conductive in a conductive state;
- control units (300A, 300C) which control switching of the upper arm-side switching elements (Trp, Tsp, Ttp) and the lower arm-side switching elements (Trn, Tsn, Ttn) and which control opening and closing of the opening/closing switch (84C), and
- a shunt resistor (R2) which is provided between the lower arm-side switching elements (Trn, Tsn, Ttn) and the capacitor (C) on the negative-side DC power line (L2) and is used to measure a value of a current flowing into the capacitor (C), wherein
- the control units (300A, 300C) close the opening/closing switch (84C) until an inrush current becomes suppressible after start of energization of the power converter circuit and control switching of each of the switching elements (Trp, Trn, Tsp, Tsn, Ttp, Ttn) so that the upper and lower arms of one phase enter a conductive state and the remaining arms enter a non-conductive state, and
- the control units (300A, 300C) set a timing at which the opening/closing switch (84C) is closed until an inrush current becomes suppressible after start of energization as a timing at which a period from the start of energization to a time in which an inrush current becomes suppressible has elapsed, the time being a time in which the value of the current which is measured by using the shunt resistor (R2) falls to or below a predetermined value.

2. The power converter circuit according to claim 1, wherein
- the upper arm-side switching elements (Trp, Tsp, Ttp) are elements which are provided on all of the upper arms of the three phases and which are respectively capable of making a current pathway conductive in only one direction from the first to third input lines (Lr, Ls, Lt) to the positive-side DC power line (L1) when in a closed state,
- the lower arm-side switching elements (Trn, Tsn, Ttn) are elements which are provided on all of the lower arms of the three phases and which are respectively capable of making a current pathway conductive in only one direction from the negative-side DC power line (L2) to the first to third input lines (Lr, Ls, Lt) when in a closed state, and
- the control unit (300C) closes the opening/closing switch (84C) until an inrush current becomes suppressible after start of energization of the power converter circuit, and places one pair among the three pairs of the upper arm-side switching elements (Trp, Tsp, Ttp) and the lower arm-side switching elements (Trn, Tsn, Ttn) connected to the same input lines in a conductive state and places the remaining two pairs in a non-conductive state.

3. The power converter circuit according to claim 1 or 2, wherein when stopping charging of the capacitor (C), the control units (300A, 300C) control switching of each of the switching elements (Trp, Trn, Tsp, Tsn, Ttp, Ttn) so that the upper and lower arms of at least two phases enter a non-conductive state.

4. The power converter circuit according to claim 2, wherein when stopping charging of the capacitor (C), the control units (300C) control switching of each of the switching elements (Trp, Tsp, Ttp, Trn, Tsn, Ttn) so that at least either all of the upper arms or all of the lower arms enter a non-conductive state.

5. The power converter circuit according to any one of claims 1,3, and 4, wherein the opening/closing switch (84C) is any of a switching element capable of unidirectional energization or a circuit that combines an electromagnetic relay and a unidirectional energizing element.

6. The power converter circuit according to any one of claims 1 to 5, wherein
- the power converter circuit is a power converter circuit of a power supply circuit included in an air conditioner which executes a refrigeration cycle by circulating a refrigerant in a refrigerant circuit to which a compressor, a heat source-side heat exchanger, an expansion valve, and a utilization-side heat exchanger are connected through piping, and
- when the control units (300A, 300C) receive a high pressure abnormality signal that is outputted when a high pressure sensor (400) which detects an abnormal rise of high pressure of the refrigeration cycle detects the abnormal rise, the control units (300A, 300C) control switching of each of the switching elements (Trp, Trn, Tsp, Tsn, Ttp, Ttn) so that the upper and lower arms of at least two phases enter a non-conductive state.

7. The power converter circuit according to any one of claims 1 to 5, wherein
- the power converter circuit is a power converter circuit of a power supply circuit included in an air conditioner which executes a refrigeration cycle by circulating a refrigerant in a refrigerant circuit to which a compressor, a heat source-side heat exchanger, an expansion valve, and a utilization-side heat exchanger are connected through piping, and
- when the control unit (300A, 300C) receives a high pressure abnormality signal that is outputted when a high pressure sensor (400) which detects an abnormal rise of high pressure of the refrigeration cycle detects the abnormal rise, the control unit (300A, 300C) controls switching of each of the switching elements (Trp, Tsp, Ttp, Trn, Tsn, Ttn) so that at least either all of the upper arms or all of the lower arms enter a non-conductive state.

8. The power converter circuit according to claim 1 or 5, wherein the power converter circuit is a power converter circuit of a power supply circuit included in an air conditioner which executes a refrigeration cycle by circulating a refrigerant in a refrigerant circuit to which a compressor, a heat source-side heat exchanger, an expansion valve, and a utilization-side heat exchanger are connected through piping, and when the control units (300A, 300C) receive a high pressure abnormality signal that is outputted when a high pressure sensor (400) which detects an abnormal rise of high pressure of the refrigeration cycle detects the abnormal rise, the control units (300A, 300C) control switching of each of the switching elements (Trp, Tsp, Ttp, Trn, Tsn, Ttn) so that the upper and lower arms of at least one phase enter a non-conductive state.

9. The power converter circuit according to claim 1 or 5, wherein
- the power converter circuit is a power converter circuit of a power supply circuit included in an air conditioner which executes a refrigeration cycle by circulating a refrigerant in a refrigerant circuit to which a compressor, a heat source-side heat exchanger, an expansion valve, and a utilization-side heat exchanger are connected through piping, and
- when the control unit (300A, 300C) receives a high pressure abnormality signal that is outputted when a high pressure sensor (400) which detects an abnormal rise of high pressure of the refrigeration cycle detects the abnormal rise, the control unit (300A, 300C) controls switching of each of the switching elements (Trp, Tsp, Ttp, Trn, Tsn, Ttn) so that at least either all of the upper arms or all of the lower arms enter a non-conductive state.

10. An air conditioner comprising:
- a motor (M); and
- the power converter circuit (2A, 2C, 20A) according to any one of claims 1 to 9,
wherein
- the power converter circuit (2A, 2C, 20A) includes:
∘ a converter circuit (10A, 10C, 100A);
∘ a capacitor (C) connected to the converter circuit (10A, 10C, 100A); and
∘ an inverter circuit (20) connected between the capacitor (C) and the motor (M).

## Patentansprüche

1. Stromumrichterschaltung, die über eine erste bis dritte Eingangsleitung (Lr, Ls, Lt) und über eine Neutralleitung (Ln) mit einem öffnenden/schließenden Schalter (84C) und einem Strombegrenzungswiderstand (R1) an eine Dreiphasen-AC-Stromversorgung (E3) angeschlossen ist und die über eine positivseitige DC-Kraftleitung (L1) und eine negativseitige DC-Kraftleitung (L2) an einen Kondensator (C) angeschlossen ist, wobei die Stromumrichterschaltung Folgendes umfasst:
- Oberer-Zweig-seitige Schaltelemente (Trp, Tsp, Ttp), die an oberen Zweigen von mindestens zwei Phasen unter oberen Zweigen von drei Phasen vorgesehen sind und die einen Strompfad von der ersten zur dritten Eingangsleitung (Lr, Ls, Lt) zu der positivseitigen DC-Kraftleitung (L1) in einem leitfähigen Zustand leitfähig machen;
- Unterer-Zweig-seitige Schaltelemente (Trn, Tsn, Ttn), die an unteren Zweigen der mindestens zwei Phasen unter den drei Phasen vorgesehen sind und die einen Strompfad von der negativseitigen DC-Kraftleitung (L2) zu der ersten bis dritten Eingangsleitung (Lr, Ls, Lt) in einem leitfähigen Zustand leitfähig machen;
- Steuereinheiten (300A, 300C), die das Schalten der Oberer-Zweig-seitigen Schaltelemente (Trp, Tsp, Ttp) und der Unterer-Zweig-seitigen Schaltelemente (Trn, Tsn, Ttn) steuern und die das Öffnen und Schließen des öffnenden/schließenden Schalters (84C) steuern, und
- einen Nebenschlusswiderstand (R2), der zwischen den Unterer-Zweig-seitigen Schaltelementen (Trn, Tsn, Ttn) und dem Kondensator (C) auf der negativseitgen DC-Kraftleitung (L2) vorgesehen ist und zum Messen eines Werts eines in den Kondensator (C) fließenden Stroms verwendet wird, wobei
- die Steuereinheiten (300A, 300C) den öffnenden/schließenden Schalter (84C) schließen, bis ein Einschaltstrom nach dem Start der Bestromung der Stromumrichterschaltung unterdrückbar wird, und das Schalten jedes der Schaltelemente (Trp, Trn, Tsp, Tsn, Ttp, Ttn) steuern, so dass der obere und untere Zweig einer Phase in einen leitfähigen Zustand eintreten und die übrigen Zweige in einen nichtleitfähigen Zustand eintreten, und
- die Steuereinheiten (300A, 300C) eine Zeitsteuerung, zu der der öffnende/schließende Schalter (84C) geschlossen wird, bis ein Einschaltstrom nach dem Start der Bestromung unterdrückbar wird, als eine Zeitsteuerung einstellen, zu der eine Periode ab dem Start der Bestromung zu einer Zeit, in der ein Einschaltstrom unterdrückbar wird, verstrichen ist, wobei die Zeit eine Zeit ist, in der der Wert des Stroms, der unter Verwendung des Nebenschlusswiderstands (R2) gemessen wird, auf oder unter einen vorbestimmten Wert fällt.

2. Stromumrichterschaltung nach Anspruch 1, wobei
- die Oberer-Zweig-seitigen Schaltelemente (Trp, Tsp, Ttp) Elemente sind, die an allen der oberen Zweige der drei Phasen vorgesehen sind und die jeweils in der Lage sind zum Leitendmachen eines Strompfads in nur einer Richtung von der ersten bis zur dritten Eingangsleitung (Lr, Ls, Lt) zu der positivseitigen DC-Kraftleitung (L1), wenn in einem geschlossenen Zustand,
- die Oberer-Zweig-seitigen Schaltelemente (Trp, Tsp, Ttp) Elemente sind, die an allen der oberen Zweige der drei Phasen vorgesehen sind und die jeweils in der Lage sind zum Leitendmachen eines Strompfads in nur einer Richtung von der negativseitgen DC-Kraftleitung (L2) zu der ersten bis dritten Eingangsleitung (Lr, Ls, Lt) wenn in einem geschlossenen Zustand, und
- die Steuereinheit (300C) den öffnenden/schließenden Schalter (84C) schließt, bis ein Einschaltstrom nach dem Start der Bestromung der Stromumrichterschaltung unterdrückbar wird, und ein Paar unter den drei Paaren der Oberer-Zweig-seitigen Schaltelemente (Trp, Tsp, Ttp) und der Unterer-Zweig-seitigen Schaltelemente (Trn, Tsn, Ttn), mit den gleichen Eingangsleitungen verbunden, in einen leitfähigen Zustand versetzt und die übrigen beiden Paare in einen nichtleitfähigen Zustand versetzt.

3. Stromumrichterschaltung nach Anspruch 1 oder 2, wobei beim Stoppen des Ladens des Kondensators (C) die Steuereinheiten (300A, 300C) das Schalten jedes der Schaltelemente (Trp, Trn, Tsp, Tsn, Ttp, Ttn) steuern, so dass der obere und untere Zweig von mindestens zwei Phasen in einen nichtleitenden Zustand eintreten.

4. Stromumrichterschaltung nach Anspruch 2, wobei beim Stoppen des Ladens des Kondensators (C) die Steuereinheiten (300C) das Schalten jedes der Schaltelemente (Trp, Tsp, Ttp, Trn, Tsn, Ttn) steuern, so dass mindestens entweder alle der oberen Zweige oder alle der unteren Zweige in einen nichtleitfähigen Zustand eintreten.

5. Stromumrichterschaltung nach einem der Ansprüche 1, 3 und 4, wobei der öffnende/schließende Schalter (84C) ein beliebiges eines Schaltelements ist, das zur unidirektionalen Bestromung fähig ist, oder einer Schaltung, die ein elektromagnetisches Relais und ein unidirektionales Bestromungselement kombiniert.

6. Stromumrichterschaltung nach einem der Ansprüche 1 bis 5, wobei
- die Stromumrichterschaltung eine Stromumrichterschaltung einer Stromversorgungsschaltung ist, die in einer Klimaanlage enthalten ist, die einen Kühlungszyklus ausführt durch Umwälzen eines Kühlmittels in einem Kühlmittelkreis, an den ein Kompressor, ein wärmequellenseitiger Wärmetauscher, ein Expansionsventil und ein nutzungsseitiger Wärmetauscher durch Rohrleitungen angeschlossen sind, und
- wenn die Steuereinheiten (300A, 300C) ein Hochdruckanomalitätssignal empfangen, das ausgegeben wird, wenn ein Hochdrucksensor (400), der einen anomalen Anstieg des Hochdrucks des Kühlungszyklus detektiert, den anomalen Anstieg detektiert, die Steuereinheiten (300A, 300C) das Schalten jedes der Schaltelemente (Trp, Trn, Tsp, Tsn, Ttp, Ttn) steuern, so dass der obere und untere Zweig von mindestens zwei Phasen in einen nichtleitenden Zustand eintreten.

7. Stromumrichterschaltung nach einem der Ansprüche 1 bis 5, wobei
- die Stromumrichterschaltung eine Stromumrichterschaltung einer Stromversorgungsschaltung ist, die in einer Klimaanlage enthalten ist, die einen Kühlungszyklus ausführt durch Umwälzen eines Kühlmittels in einem Kühlmittelkreis, an den ein Kompressor, ein wärmequellenseitiger Wärmetauscher, ein Expansionsventil und ein nutzungsseitiger Wärmetauscher durch Rohrleitungen angeschlossen sind, und
- wenn die Steuereinheit (300A, 300C) ein Hochdruckanomalitätssignal empfängt, das ausgegeben wird, wenn ein Hochdrucksensor (400), der einen anomalen Anstieg des Hochdrucks des Kühlungszyklus detektiert, den anomalen Anstieg detektiert, die Steuereinheit (300A, 300C) das Schalten jedes der Schaltelemente (Trp, Trn, Tsp, Tsn, Ttp, Ttn) steuert, so dass mindestens entweder alle der oberen Zweige oder alle der unteren Zweige in einen nichtleitfähigen Zustand eintreten.

8. Stromumrichterschaltung nach einem der Ansprüche 1 bis 5, wobei die Stromumrichterschaltung eine Stromumrichterschaltung einer Stromversorgungsschaltung ist, die in einer Klimaanlage enthalten ist, die einen Kühlungszyklus ausführt durch Umwälzen eines Kühlmittels in einem Kühlmittelkreis, an den ein Kompressor, ein wärmequellenseitiger Wärmetauscher, ein Expansionsventil und ein nutzungsseitiger Wärmetauscher durch Rohrleitungen angeschlossen sind, und wenn die Steuereinheiten (300A, 300C) ein Hochdruckanomalitätssignal empfangen, das ausgegeben wird, wenn ein Hochdrucksensor (400), der einen anomalen Anstieg des Hochdrucks des Kühlungszyklus detektiert, den anomalen Anstieg detektiert, die Steuereinheiten (300A, 300C) das Schalten jedes der Schaltelemente (Trp, Tsp, Ttp, Trn, Tsn, Ttn) steuern, so dass der obere und untere Zweig von mindestens einer Phase in einen nichtleitenden Zustand eintreten.

9. Stromumrichterschaltung nach einem der Ansprüche 1 bis 5, wobei
- die Stromumrichterschaltung eine Stromumrichterschaltung einer Stromversorgungsschaltung ist, die in einer Klimaanlage enthalten ist, die einen Kühlungszyklus ausführt durch Umwälzen eines Kühlmittels in einem Kühlmittelkreis, an den ein Kompressor, ein wärmequellenseitiger Wärmetauscher, ein Expansionsventil und ein nutzungsseitiger Wärmetauscher durch Rohrleitungen angeschlossen sind, und
- wenn die Steuereinheit (300A, 300C) ein Hochdruckanomalitätssignal empfängt, das ausgegeben wird, wenn ein Hochdrucksensor (400), der einen anomalen Anstieg des Hochdrucks des Kühlungszyklus detektiert, den anomalen Anstieg detektiert, die Steuereinheit (300A, 300C) das Schalten jedes der Schaltelemente (Trp, Tsp, Ttp, Trn, Tsn, Ttn) steuert, so dass mindestens entweder alle der oberen Zweige oder alle der unteren Zweige in einen nichtleitfähigen Zustand eintreten.

10. Klimaanlage, umfassend:
- einen Motor (M); und
- eine Stromumrichterschaltung (2A, 2C, 20A) nach einem der Ansprüche 1 bis 9,
- wobei
- die Stromumrichterschaltung (2A, 2C, 20A) Folgendes enthält:
∘ eine Umrichterschaltung (10A, 10C, 100A);
∘ einen mit der Umrichterschaltung (10A, 10C, 100A) verbundenen Kondensator (C); und
∘ einen zwischen den Kondensator (C) und den Motor (M) geschaltete Wechselrichterschaltung (20).

## Revendications

1. Circuit convertisseur de puissance raccordé à une alimentation triphasée en alternatif (E3) par l'intermédiaire de première et de troisième lignes d'entrée (Lr, Ls, Lt) et par l'intermédiaire aussi d'une ligne neutre (Ln) y compris un commutateur d'ouverture/de fermeture (84C) et une résistance de limitation de courant (R1), et raccordé aussi à un condensateur (C) par l'intermédiaire d'une ligne d'alimentation (L1) à courant continu côté positif et d'une ligne d'alimentation (L2) à courant continu côté négatif, le circuit convertisseur de puissance comportant:
- des éléments de commutation côté bras supérieurs (Trp, Tsp, Ttp) qui sont prévus dans les bras supérieurs d'au moins deux phases parmi les bras supérieurs de trois phases, et qui rendent conducteur un chemin pour le courant entre les première et troisième lignes d'entrée (Lr, Ls, Lt) et la ligne d'alimentation électrique (L1) à courant continu côté positif dans un état conducteur;
- des éléments de commutation côté bras inférieurs (Trn, Tsn, Ttn) qui sont prévus dans les bras inférieurs d'au moins deux phases parmi les trois phases, et qui rendent conducteur un chemin pour le courant entre la ligne d'alimentation électrique (L2) à courant continu côté négatif et les première et troisième lignes d'entrée (Lr, Ls, Lt) dans un état conducteur;
- des unités de commande (300A, 300C) qui contrôlent la commutation des éléments de commutation côté bras supérieurs (Trp, Tsp, Ttp) et des éléments de commutation côté bras inférieurs (Trn, Tsn, Ttn) et qui contrôlent aussi l'ouverture et la fermeture du commutateur d'ouverture/de fermeture (84C), et
- une résistance shunt (R2) prévue entre les éléments de commutation (Trn, Tsn, Ttn) côté bras inférieurs et le condensateur (C) sur la ligne d'alimentation (L2) en continu côté négatif, et servant à mesurer la valeur d'un courant qui se rend dans le condensateur (C), **caractérisé en ce que**
- les unités de commande (300A, 300C) ferment le commutateur d'ouverture/de fermeture (84C) jusqu'au moment où un courant d'appel devient supprimable après le début de l'alimentation du circuit convertisseur de puissance et la commutation de contrôle de chacun des éléments de commutation (Trp, Trn, Tsp, Tsn, Ttp, Ttn) de sorte que les bras supérieurs et inférieurs d'une phase se mettent en état conducteur et les autres bras se mettent en état non conducteur, et
- les unités de commande (300A, 300C) déterminent le moment où le commutateur d'ouverture/de fermeture (84C) est fermé jusqu'au moment où un courant d'appel devient supprimable après le début de l'alimentation, ce temps étant égal à la période qui s'écoule entre le début de l'alimentation et le moment où le courant d'appel devient supprimable, la période étant celle pendant laquelle la valeur du courant, mesurée au moyen de la résistance shunt (R2), baisse à un niveau prédéterminé ou bien au-dessous de ce niveau.

2. Circuit convertisseur de puissance selon la revendication 1, **caractérisé en ce que**
- les éléments de commutation côté bras supérieurs (Trp, Tsp, Ttp) sont des éléments prévus dans tous les bras supérieurs des trois phases et qui sont respectivement capables de créer un chemin pour le courant qui est conducteur seulement dans un sens entre les première et troisième lignes d'entrée (Lr, Ls, Lt) et la ligne d'alimentation (L1) à courant continu côté positif en état fermé,
- les éléments de commutation côté bras inférieurs (Trn, Tsn, Ttn) sont des éléments prévus dans tous les bras inférieurs des trois phases et qui sont respectivement capables de créer un chemin pour le courant qui est conducteur seulement dans un sens entre la ligne d'alimentation (L2) à courant continu côté négatif et les première à troisième lignes d'entrée (Lr, Ls, Lt) à l'état de fermeture,
- l'unité de commande (300C) ferme le commutateur d'ouverture/de fermeture (84C) jusqu'au moment où un courant d'appel devient supprimable après le début de l'alimentation du circuit convertisseur de puissance, et place une paire parmi les trois paires d'éléments de commutation côté bras supérieurs (Trp, Tsp, Ttp) et les éléments de commutation côté bras inférieurs (Trn, Tsn, Ttn) raccordés aux mêmes lignes d'entrée dans un état conducteur, et place les deux autres paires dans un état non conducteur.

3. Circuit convertisseur de puissance selon la revendication 1 ou 2, **caractérisé en ce que** lorsqu'on cesse de charger le condensateur (C), les unités de commande (300A, 300C) contrôlent la commutation de chacun des éléments de commutation (Trp, Trn, Tsp, Tsn, Ttp, Ttn) de manière à ce que les bras supérieurs et inférieurs d'au moins deux phases se mettent en état non conducteur.

4. Circuit convertisseur de puissance selon la revendication 2, **caractérisé en ce que** lorsqu'on cesse de charger le condensateur (C), les unités de commande (300C) contrôlent la commutation de chacun des éléments de commutation (Trp, Tsp, Ttp, Trn, Tsn, Ttn) de manière à ce que les bras supérieurs et inférieurs d'au moins deux phases se mettent en état non conducteur.

5. Circuit convertisseur de puissance selon l'une quelconque des revendications 1, 3 et 4, **caractérisé en ce que** le commutateur d'ouverture/de fermeture (84C) est soit un élément de commutation capable d'assurer l'alimentation unidirectionnelle, soit un circuit qui comprend un relais électromagnétique ainsi qu'un élément d'alimentation unidirectionnel.

6. Circuit convertisseur de puissance selon l'une quelconque des revendications 1 à 5, **caractérisé en ce que**
- le circuit convertisseur de puissance est un circuit convertisseur de puissance faisant partie d'un circuit d'alimentation électrique inclus dans un conditionneur d'air qui effectue un cycle de réfrigération en faisant circuler un réfrigérant dans un circuit de réfrigération auquel sont connectés un compresseur, un échangeur de chaleur côté source de chaleur, un robinet détendeur, et un échangeur de chaleur côté utilisation par l'intermédiaire de tuyauteries, et
- lorsque les unités de commande (300A, 300C) reçoivent un signal d'anomalie haute pression qui est présenté à la sortie quand un capteur haute pression (400), qui sert à détecter une élévation anormale de la haute pression du cycle de réfrigération, détecte cette élévation anormale, les unités de commande (300A, 300C) contrôlent la commutation de chacun des éléments de commutation (Trp, Trn, Tsp, Tsn, Ttp, Ttn) de manière à ce que les bras supérieurs et inférieurs d'au moins deux phases se mettent en état non conducteur.

7. Circuit convertisseur de puissance selon l'une quelconque des revendications 1 à 5, **caractérisé en ce que**
- le circuit convertisseur de puissance est un circuit convertisseur de puissance faisant partie d'un circuit d'alimentation électrique inclus dans un conditionneur d'air qui effectue un cycle de réfrigération en faisant circuler un réfrigérant dans un circuit de réfrigération auquel sont connectés un compresseur, un échangeur de chaleur côté source de chaleur, un robinet détendeur, et un échangeur de chaleur côté utilisation par l'intermédiaire de tuyauteries, et
- lorsque l'unité de commande (300A, 300C) reçoit un signal d'anomalie haute pression qui est présenté à la sortie quand un capteur haute pression (400), qui sert à détecter une élévation anormale de la haute pression du cycle de réfrigération, détecte cette élévation anormale, l"unité de commande (300A, 300C) contrôle la commutation de chacun des éléments de commutation (Trp, Tsp, Ttp, Trn, Tsn, Ttn) de manière à ce qu'au moins soit tous les bras supérieurs soit tous les bras inférieurs se mettent en état non conducteur.

8. Circuit convertisseur de puissance selon l'une quelconque des revendications 1 ou 5, **caractérisé en ce que** le circuit convertisseur de puissance est un circuit convertisseur de puissance faisant partie d'un circuit d'alimentation électrique inclus dans un conditionneur d'air qui effectue un cycle de réfrigération en faisant circuler un réfrigérant dans un circuit de réfrigération auquel sont connectés un compresseur, un échangeur de chaleur côté source de chaleur, un robinet détendeur, et un échangeur de chaleur côté utilisation par l'intermédiaire de tuyauteries, et lorsque les unités de commande (300A, 300C) reçoivent un signal d'anomalie haute pression qui est présenté à la sortie quand un capteur haute pression (400), servant à détecter une élévation anormale de la haute pression du cycle de réfrigération, détecte cette élévation anormale, les unités de commande (300A, 300C) contrôlent la commutation de chacun des éléments de commutation (Trp, Tsp, Ttp, Trn, Tsn, Ttn) de manière à ce que les bras supérieurs et inférieurs d'au moins une phase se mettent en état non conducteur.

9. Circuit convertisseur de puissance selon l'une quelconque des revendications 1 ou 5, **caractérisé en ce que**
- le circuit convertisseur de puissance est un circuit convertisseur de puissance faisant partie d'un circuit d'alimentation électrique inclus dans un conditionneur d'air qui effectue un cycle de réfrigération en faisant circuler un réfrigérant dans un circuit de réfrigération auquel sont connectés un compresseur, un échangeur de chaleur côté source de chaleur, un robinet détendeur, et un échangeur de chaleur côté utilisation par l'intermédiaire de tuyauteries, et
- lorsque l'unité de commande (300A, 300C) reçoit un signal d'anomalie haute pression qui est présenté à la sortie quand un capteur haute pression (400), qui sert à détecter une élévation anormale de la haute pression du cycle de réfrigération, détecte cette élévation anormale, l'unité de commande (300A, 300C) contrôle la commutation de chacun des éléments de commutation (Trp, Tsp, Ttp, Trn, Tsn, Ttn) de manière à ce qu'au moins soit tous les bras supérieurs soit tous les bras inférieurs se mettent en état non conducteur.

10. Conditionneur d'air comportant:
- un moteur (M); et
- le circuit convertisseur de puissance (2A, 2C, 20A) selon l'une quelconque des revendications 1 à 9,
**caractérisé en ce que**
- le circuit convertisseur de puissance (2A, 2C, 20A) comprend:
∘ un circuit convertisseur (10A, 10C, 100A);
∘ un condensateur (C) raccordé au circuit convertisseur (10A, 10C, 100A); et
∘ un circuit onduleur (20) raccordé entre le condensateur (C) et le moteur (M).
